(19) Europäisches Patentamt
European Patent Office
Office européen des brevets

(11) **EP 3 434 730 A1**

(12) **EUROPEAN PATENT APPLICATION**
published in accordance with Art. 153(4) EPC

(43) Date of publication:
**30.01.2019 Bulletin 2019/05**

(21) Application number: **17782389.5**

(22) Date of filing: **11.04.2017**

(51) Int Cl.:
*C08L 23/22* [(2006.01)]   *B29C 73/16* [(2006.01)]
*B60C 19/12* [(2006.01)]   *C08K 3/22* [(2006.01)]
*C08K 5/14* [(2006.01)]   *C08L 23/28* [(2006.01)]
*C08L 101/12* [(2006.01)]

(86) International application number:
**PCT/JP2017/014832**

(87) International publication number:
**WO 2017/179576 (19.10.2017 Gazette 2017/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.04.2016 JP 2016081262**

(71) Applicant: **Sumitomo Rubber Industries, Ltd.
Kobe-shi, Hyogo 651-0072 (JP)**

(72) Inventor: **SUGIMOTO, Mutsuki
Kobe-shi
Hyogo 651-0072 (JP)**

(74) Representative: **Manitz Finsterwald Patentanwälte
PartmbB
Martin-Greif-Strasse 1
80336 München (DE)**

(54) **RUBBER COMPOSITION FOR PNEUMATIC TIRES**

(57)   Provided are a rubber composition for self-sealing tires which has a particularly good balance of excellent sealing performance and fluidity, and a self-sealing tire including the rubber composition. The present invention relates to a rubber composition for pneumatic tires, the rubber composition having a shear modulus at 0°C of 12 to 40 kPa and a shear modulus at 95°C of 2 to 10 kPa.

Fig.9

**Description**

TECHNICAL FIELD

The present invention relates to a rubber composition for pneumatic tires and a pneumatic tire including the rubber composition.

BACKGROUND ART

Self-sealing tires with sealants applied to their inner periphery are known as puncture resistant pneumatic tires (hereinafter, pneumatic tires are also referred to simply as tires). Sealants automatically seal puncture holes formed in such self-sealing tires.

There are several known methods for producing self-sealing tires (see, for example, Patent Literature 1), one of which involves adding an organic solvent to a sealant to reduce the viscosity enough to be easy to handle, attaching the diluted sealant to the inner surface of a tire, and removing the organic solvent from the attached diluted sealant. Another method involves mixing a base agent prepared in a batch kneading machine with a curing agent using a static or dynamic mixer to prepare a sealant and attaching the sealant to the inner periphery of a tire.

Patent Literature 2 discloses a method in which a sealant is attached to the inner periphery of a tire by pressing using a press roller.

CITATION LIST

PATENT LITERATURE

    Patent Literature 1: JP 2010-528131 T
    Patent Literature 2: JP 2001-18609 A

SUMMARY OF INVENTION

TECHNICAL PROBLEM

Although methods for producing self-sealing tires have been studied as disclosed in Patent Literatures 1 and 2, none of these studies investigates the formulation of sealants in detail. The present inventor has found that, when self-sealing tires with sealants applied to their inner periphery are running, the applied sealants may flow within the inner periphery of the self-sealing tires so that an insufficient amount of sealant may partially exist on the inner periphery of the self-sealing tires (i. e. , the sealant layer may be partially thinned) . Thus, the present inventor has found that it is desirable for the sealants not to flow too much even at high temperatures during running, but to be able to flow enough to provide good sealing performance when the tires are punctured, and further to be able to flow enough to provide good sealing performance even at low temperatures, e.g. in winter.

The present invention aims to solve the problem and provide a rubber composition for self-sealing tires which has a particularly good balance of excellent sealing performance and fluidity, and a self-sealing tire including the rubber composition.

SOLUTION TO PROBLEM

The present invention relates to a rubber composition for pneumatic tires, the rubber composition having an absolute difference between viscosities at 0°C and 95°C of 1 to 79 kPa·s and an absolute difference between shear moduli at 0°C and 95°C of 2 to 38 kPa.

Preferably, the rubber composition has a shear modulus at 0°C of 12 to 40 kPa and a shear modulus at 95°C of 2 to 10 kPa.

Preferably, the rubber composition has a viscosity at 0°C of 16 to 80 kPa·s and a viscosity at 95°C of 1 to 15 kPa·s.

Preferably, the rubber composition contains: a rubber component including a butyl-based rubber; and an organic peroxide.

Preferably, the butyl-based rubber is present in an amount of 80% by mass or more based on 100% by mass of the rubber component.

Preferably, the rubber composition contains, per 100 parts by mass of the rubber component, 1 to 40 parts by mass of the organic peroxide and 1 to 40 parts by mass of a crosslinking activator.

Preferably, the crosslinking activator is zinc oxide.

Preferably, the butyl-based rubber is a halogenated butyl rubber.

Preferably, the halogenated butyl rubber is a brominated butyl rubber.

Preferably, the rubber composition contains a liquid polymer in an amount of 100 to 400 parts by mass per 100 parts by mass of the rubber component.

Preferably, the liquid polymer is a liquid polybutene.

The present invention also relates to a pneumatic tire, including a sealant layer formed from the rubber composition.

## ADVANTAGEOUS EFFECTS OF INVENTION

The rubber composition for pneumatic tires of the present invention has an absolute difference between the viscosities at 0°C and 95°C within a predetermined range and an absolute difference between the shear moduli at 0°C and 95°C within a predetermined range. Such a rubber composition may be used to provide a sealant which has a particularly good balance of excellent sealing performance and fluidity.

## BRIEF DESCRIPTION OF DRAWINGS

Fig. 1 is an explanatory view schematically showing an example of an applicator used in a method for producing a self-sealing tire of the present invention.
Fig. 2 is an enlarged view showing the vicinity of the tip of the nozzle included in the applicator shown in Fig. 1.
Fig. 3 is an explanatory view schematically showing the positional relationship of the nozzle to a tire.
Fig. 4 is an explanatory view schematically showing an example of a generally string-shaped sealant continuously and spirally attached to the inner periphery of a tire.
Figs. 5 are enlarged views showing the vicinity of the tip of the nozzle included in the applicator shown in Fig. 1.
Fig. 6 is an explanatory view schematically showing an example of a sealant attached to a self-sealing tire.
Fig. 7 is an explanatory view schematically showing an example of a production facility used in a method for producing a self-sealing tire.
Fig. 8 is an explanatory view schematically showing an example of a cross-section of the sealant shown in Fig. 4 when the sealant is cut along the A-A straight line orthogonal to the direction (longitudinal direction) along which the sealant is applied.
Fig. 9 is an explanatory view schematically showing an example of a cross-section of a pneumatic tire.
Fig. 10 shows general graphs of exemplary results of measurements of the steady-flow shear viscosity of sealants.

## DESCRIPTION OF EMBODIMENTS

The rubber composition for pneumatic tires (rubber composition for self-sealing tires or sealant) of the present invention has an absolute difference between the viscosities at 0°C and 95°C of 1 to 79 kPa·s and an absolute difference between the shear moduli at 0°C and 95°C of 2 to 38 kPa.

In the present invention, the viscosity at each of the temperatures (0°C, 95°C) is defined as the maximum shear viscosity determined when the steady-flow shear viscosity of the sealant is measured under the conditions described below to plot a graph with measurement strain on the horizontal axis and shear viscosity on the vertical axis for each of the measurement temperatures. Moreover, the shear modulus at each of the temperatures (0°C, 95°C) is defined as the slope of the graph within a measurement strain range from 0% to 100%.

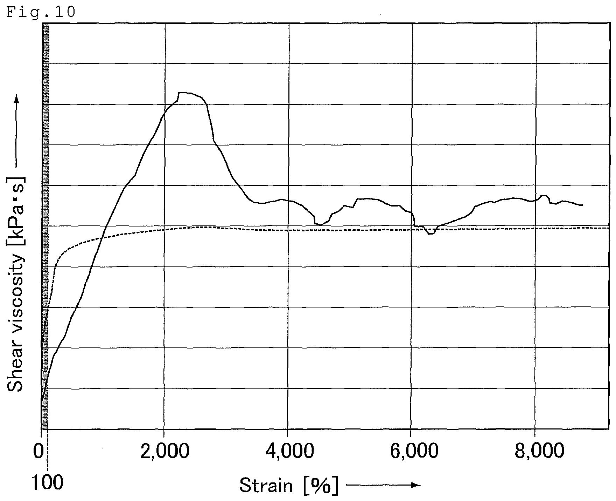

Fig. 10 shows exemplary general graphs with measurement strain on the horizontal axis and shear viscosity on the vertical axis obtained by measuring the steady-flow shear viscosity of sealants. In Fig. 10, the measurement strain range from 0% to 100% is colored. Thus, the slope of each graph in the colored region in Fig. 10 represents shear modulus.

<Measurement conditions>

Measurement Device: rheometer MCR52 available from Anton Paar Japan K.K.

Measurement mode: Steady-flow shear viscosity
Measurement temperature: 0°C or 95°C

Preheating time: 1 minute after insertion between plates heated at a preset temperature

Gap: 1 mm, distance between plates, no extruded sealant

Measurement time: 15 seconds

Measurement strain: 0 to 10,000%

Shear rate: 6 (1/s)

Rotor shape: Circular plate

A person skilled in the art should consider that a sealant will obtain excellent sealing performance and fluidity when it is controlled to have a high shear viscosity so as not to flow too much at low strains (corresponding to, for example, deformation of the sealant caused by running of the vehicle), and further to have a low shear viscosity so as to flow enough to provide good sealing performance at high strains (corresponding to deformation of the sealant caused by puncturing of the tire by a foreign object such as a nail) . Thus, in order to produce a sealant excellent in sealing performance and fluidity, it is considered that the target sealant to be developed should have a high shear viscosity at low strains but have a low shear viscosity at high strains, as shown by the dotted line in Fig. 10. However, contrary to the expectation that since the sealing performance and fluidity of sealants correlate with shear modulus as well as with viscosity, a sealant having a high shear viscosity (i.e. a high shear modulus in the present invention) at low strains but having a low shear viscosity (i.e. a low viscosity in the present invention) at high strains would provide excellent sealing performance and fluidity, the present inventor has found as a result of extensive research that a sealant having a high viscosity (maximum shear viscosity) and a low shear modulus (a small slope of the graph within a measurement strain range from 0% to 100%), namely a sealant having physical properties as shown by the solid line in Fig. 10, is particularly excellent in the balance between sealing performance and fluidity. Specifically, it has been found that a sealant having an absolute difference between the viscosities at 0°C and 95°C of 1 to 79 Pa·s and an absolute difference between the shear moduli at 0°C and 95°C of 2 to 38 kPa is particularly excellent in the balance between sealing performance and fluidity. The present inventor was the first to discover this fact.

As described above, the present inventor first found that a sealant having a high viscosity (maximum shear viscosity) and a low shear modulus (a small slope of the graph within a measurement strain range from 0% to 100%) is particularly excellent in the balance between sealing performance and fluidity. This seems to be because, firstly, since viscosity is a parameter which relates to sagging and rubber flow and mainly corresponds to fluidity, a sealant having a higher viscosity is less likely to flow and does not sag at rest and further does not flow too much even at high temperatures during running, thereby providing good fluidity. Secondly, it seems because since shear modulus is a parameter which mainly corresponds to sealing performance, a sealant having a lower shear modulus is more flexible and can adhere well to a foreign object such as a nail which has punctured the tire, thereby providing good sealing performance.

Thus, a sealant controlled to have an absolute difference between the viscosities at 0°C and 95°C within the predetermined range and an absolute difference between the shear moduli at 0°C and 95°C within the predetermined range does not flow too much even at high temperatures during running but can flow enough to provide good sealing performance when the tires are punctured, and also can flow enough to provide good sealing performance even at low temperatures, e.g. in winter. Further, the sealant can adhere well to a foreign object such as a nail which has punctured the tire, both at high temperatures during running and at low temperatures, e.g. in winter. Therefore, it is possible to provide a sealant that has a particularly good balance of excellent sealing performance and fluidity.

The rubber composition of the present invention has an absolute difference between the viscosities at 0°C and 95°C of 1 to 79 kPa·s. When the absolute difference between the viscosities at 0°C and 95°C is within the above-mentioned range, the resulting sealant has a difference between the viscosities at low and high temperatures within a predetermined range and therefore a low temperature dependence of viscosity. Such a sealant can provide a particularly good balance of excellent sealing performance and fluidity.

The absolute difference between the viscosities at 0°C and 95°C is preferably 5 kPa·s or higher, more preferably 10 kPa·s or higher, still more preferably 13 kPa·s or higher, particularly preferably 15 kPa·s or higher, but is preferably 75 kPa·s or lower, more preferably 73 kPa·s or lower, still more preferably 68 kPa·s or lower, particularly preferably 50 kPa·s or lower, most preferably 25 kPa·s or lower.

The rubber composition of the present invention has an absolute difference between the shear moduli at 0°C and 95°C of 2 to 38 kPa. When the absolute difference between the shear moduli at 0°C and 95°C is within the above-mentioned range, the resulting sealant has a difference between the shear moduli at low and high temperatures within a predetermined range and therefore a low temperature dependence of shear modulus. Such a sealant can provide a particularly good balance of excellent sealing performance and fluidity.

The absolute difference between the shear moduli at 0°C and 95°C is preferably 2 to 36 kPa, more preferably 2 to 34 kPa, still more preferably 2 to 30 kPa, particularly preferably 2 to 28 kPa.

The properties of the rubber composition in terms of viscosity (the absolute difference between the viscosities at 0°C and 95°C is 1 to 79 kPa·s) and shear modulus (the absolute difference between the shear moduli at 0°C and 95°C is 2 to 38 kPa) may be obtained by, but not limited to, preparing the rubber composition to have a predetermined formulation as described later. A person skilled in the art will understand how to prepare the rubber composition of the present invention having an absolute difference between the viscosities at 0°C and 95°C within the predetermined range and an absolute difference between the shear moduli at 0°C and 95°C within the predetermined range, for the following reasons.

Firstly, with regard to viscosity, it is a matter of common knowledge in the chemical field that the viscosity of a compound generally correlates with the molecular weight of the compound, and a lower molecular weight tends to lead to a lower viscosity while a higher molecular weight tends to lead to a higher viscosity. Thus, a person skilled in the art can readily understand whether the viscosity of a rubber composition containing a particular component is high or low by reference to the molecular weight of the component, regardless of the type of component used in the composition. Furthermore, the followings are also matters of common knowledge in the sealant field: polymer components (e.g. rubber components) with higher molecular weight have higher viscosity because such molecules have lower mobility; an increase in the amount of reinforcing agents (fillers) results in a higher reinforcing effect and a higher viscosity; an increase in the amount of crosslinking agents results in a higher degree of crosslinking and a higher viscosity; and an increase in the amount of liquid components results in a larger distance between polymer components and a lower viscosity. Therefore, whatever components are used in a rubber composition, a person skilled in the art can adjust the absolute difference between the viscosities at 0°C and 95°C of the rubber composition to a predetermined range.

Secondly, shear modulus is described. Molecules of compounds are generally crosslinked with each other by chemical bonds. Strength is provided when these crosslinks are stretched and broken. In the case of rubber compositions, when rubber is deformed by shear deformation, the crosslinks are stretched so that the rubber is hardened to have a higher shear modulus. In other words, the shear modulus of a rubber composition correlates with the degree of crosslinking of the rubber composition, and a higher degree of crosslinking tends to lead to a higher shear modulus while a lower degree of crosslinking tend to lead to a lower shear modulus. This is a matter of common knowledge in the chemical field. The number of crosslinks in chemical crosslinking may be controlled by varying the type of polymer component to be crosslinked or the type of crosslinking agent for linking these molecules, or by adjusting kneading conditions. This is also a matter of common knowledge in the chemical field. Furthermore, the followings are matters of common knowledge in the sealant field: a decrease in the amount of crosslinking agents results in the rubber composition undergoing less chemical crosslinking reaction and thus having a lower shear modulus; and a decrease in pressure or temperature during kneading slows down the reaction in the extruder during kneading and thereby results in the rubber composition undergoing less chemical crosslinking reaction and thus having a lower shear modulus. Therefore, whatever components are used in a rubber composition, a person skilled in the art can control the absolute difference between the shear moduli at 0°C and 95°C of the rubber composition to a predetermined range.

Consequently, it is possible to prepare the rubber composition of the present invention having an absolute difference between the viscosities at 0°C and 95°C within a predetermined range and an absolute difference between the shear moduli at 0°C and 95°C within a predetermined range by combining the above-mentioned principles, e.g. increasing viscosity using a high molecular weight polymer component (e.g. rubber component) while reducing the amount of crosslinking agents or lowering the pressure or temperature during kneading to reduce shear modulus.

The properties of the rubber composition in terms of viscosity (the absolute difference between the viscosities at 0°C and 95°C is 1 to 79 kPa·s) and shear modulus (the absolute difference between the shear moduli at 0°C and 95°C is 2 to 38 kPa) may be obtained particularly by varying the type of rubber component or the type or amount of crosslinking agent to be compounded in the rubber composition, or the type or amount of liquid polymer, if compounded in the rubber composition, or adjusting conditions (e.g. pressure, temperature) for kneading the rubber composition.

The rubber composition of the present invention preferably has a viscosity at 0°C of 16 to 80 kPa·s. The rubber composition having a viscosity at 0°C falling within the above range ensures a moderate fluidity even at low temperatures, e.g. in winter so that good sealing performance can be provided. The viscosity at 0°C is more preferably 20 kPa·s or higher, still more preferably 25 kPa·s or higher, but is more preferably 60 kPa·s or lower, still more preferably 40 kPa·s or lower, further preferably 35 kPa·s or lower.

Herein, viscosity at 0°C is determined by measuring steady-flow shear viscosity at 0°C using a rheometer. Specifically, it may be determined as described later in EXAMPLES.

The rubber composition of the present invention preferably has a viscosity at 95°C of 1 to 15 kPa·s. The rubber composition having a viscosity at 95°C falling within the above range does not flow too much even at high temperatures during running but ensures a moderate fluidity so that good sealing performance can be provided when the tire is punctured. The viscosity at 95°C is more preferably 5 kPa·s or higher, still more preferably 8 kPa·s or higher, further preferably 10 kPa·s or higher, but is more preferably 14 kPa·s or lower.

Herein, viscosity at 95°C is determined by measuring steady-flow shear viscosity at 95°C using a rheometer. Specifically, it may be determined as described later in EXAMPLES.

The rubber composition having a viscosity at 0°C of 16 to 80 kPa·s and a viscosity at 95°C of 1 to 15 kPa·s may be obtained by, but not limited to, preparing the rubber composition to have a predetermined formulation as described later. As described earlier, these viscosities may be adjusted by other techniques as well.

It is generally known that the viscosities at 0°C and 95°C of a rubber composition may both be adjusted by varying the type or amount of rubber component, reinforcing agent (filler), crosslinking agent, or crosslinking activator to be compounded in the rubber composition, or the type or amount of liquid polymer, if compounded in the rubber composition.

Basically, the viscosity at 0°C of a rubber composition is greatly affected by the molecular mobility of the polymer in the rubber composition. A polymer having lower molecular mobility tends to increase viscosity. Moreover, the viscosity at 95°C of a rubber composition is greatly affected by the level of crosslink density of the rubber component in the rubber composition. A rubber component having a higher crosslink density tends to increase viscosity.

More specifically, an increase in the amount of rubber component, reinforcing agent (filler), crosslinking agent, or crosslinking activator leads to both increased viscosities at 0°C and 95°C, while an increase in the amount of liquid polymer leads to both reduced viscosities at 0°C and 95°C.

The rubber composition of the present invention preferably has a shear modulus at 0°C of 12 to 40 kPa. When the shear modulus at 0°C is within the above range, the sealant can adhere well to a foreign object such as a nail which has punctured the tire, while ensuring a moderate fluidity even at low temperatures, e.g. in winter, thereby providing good sealing performance. The shear modulus at 0°C is preferably as low as possible within the above range. Specifically, it is more preferably 38 kPa or lower, still more preferably 25 kPa or lower, further preferably 20 kPa or lower, particularly preferably 17 kPa or lower.

Herein, shear modulus at 0°C is determined by measuring steady-flow shear viscosity at 0°C using a rheometer and reading shear modulus within a measurement strain range from 0% to 100% . Specifically, it may be determined as described later in EXAMPLES.

The rubber composition of the present invention preferably has a shear modulus at 95°C of 2 to 10 kPa. When the shear modulus at 95°C is within the above range, the sealant does not flow too much even at high temperatures during running but can adhere well to a foreign object such as a nail which has punctured the tire, while ensuring a moderate fluidity, thereby providing good sealing performance. The shear modulus at 95°C is preferably as high as possible within the above range. Specifically, it is more preferably 3 kPa or higher, still more preferably 4 kPa or higher, further preferably 5 kPa or higher, particularly preferably 6 kPa or higher, most preferably 7 kPa or higher.

Herein, shear modulus at 95°C is determined by measuring steady-flow shear viscosity at 95°C using a rheometer and reading shear modulus within a measurement strain range from 0% to 100%. Specifically, it may be determined as described later in EXAMPLES.

The rubber composition having a shear modulus at 0°C of 12 to 40 kPa and a shear modulus at 95°C of 2 to 10 kPa may be obtained by, but not limited to, preparing the rubber composition to have a predetermined formulation as described later. As described earlier, these shear moduli may be adjusted by other techniques as well.

It is generally known that the shear moduli at 0°C and 95°C of a rubber composition may both be adjusted by varying the type or amount of rubber component, reinforcing agent (filler), crosslinking agent, or crosslinking activator to be compounded in the rubber composition, or the type or amount of liquid polymer, if compounded in the rubber composition, or adjusting conditions (e.g. pressure, temperature) for kneading the rubber composition.

Basically, the shear modulus at 0°C of a rubber composition is greatly affected by the degree of crosslinking, i.e. the molecular mobility of the polymer, in the rubber composition. A polymer having higher molecular mobility (a lower degree of crosslinking) tends to reduce shear modulus at 0°C. Moreover, the viscosity at 95°C of a rubber composition is greatly affected by the level of crosslink density of the rubber component in the rubber composition. A rubber component having a higher crosslink density has a higher degree of crosslinking and tends to increase shear modulus at 95°C.

More specifically, an increase in the amount of crosslinking agent or crosslinking activator leads to a higher shear modulus at 95°C, while an increase in the amount of liquid polymer leads to a more flexible system as a whole and a lower shear modulus at 0°C.

The rubber composition (sealant) for self-sealing tires of the present invention preferably contains a rubber component including a butyl-based rubber and an organic peroxide.

When the composition of the sealant, which will be described later, includes a butyl-based rubber and an organic peroxide, particularly when it includes a butyl-based rubber and predetermined amounts of an organic peroxide and a crosslinking activator, especially wherein the butyl-based rubber is a halogenated butyl rubber (in particular a brominated butyl rubber), and the crosslinking activator is zinc oxide or a quinone dioxime compound, the prepared sealant has an absolute difference between the viscosities at 0°C and 95°C within the predetermined range and an absolute difference between the shear moduli at 0°C and 95°C within the predetermined range, and thus has a particularly good balance of excellent sealing performance and fluidity.

Further, the sealant which has been mixed in, for example, a twin screw kneading extruder and in which the crosslinking reaction in the extruder is suppressed (controlled) may be directly applied to the tire inner surface. Moreover, the crosslinking reaction of the sealant begins upon the application (of course, it is possible for the crosslinking reaction to have already proceeded to some extent), and then the adhesion to the tire inner surface and the crosslinking reaction of the sealant proceed. Thus, it is possible to apply and process the sealant in a series of steps which improves productivity.

The rubber composition (sealant) for self-sealing tires of the present invention is applied to portions of the inner surface of a self-sealing tire where a puncture hole can be formed, such as treads. The following will describe the sealant by reference to suitable examples of methods for producing a self-sealing tire.

The pneumatic tire (self-sealing tire) of the present invention may be produced, for example, by preparing a sealant by mixing the components of the sealant, and then attaching the sealant to the inner periphery of a tire by application or other means to form a sealant layer. The self-sealing tire includes the sealant layer located radially inside the innerliner.

Suitable examples of methods for producing the self-sealing tire of the present invention will be described below.

The self-sealing tire of the present invention may be produced, for example, by preparing a sealant by mixing the components of the sealant, and then attaching the sealant to the inner periphery of a tire by application or other means to form a sealant layer. The self-sealing tire includes the sealant layer located radially inside the innerliner.

The hardness of the sealant needs to be controlled by controlling the rubber component and the degree of crosslinking to give an appropriate viscosity and shear modulus according to the service temperature. Thus, the rubber component is controlled by varying the type or amount of liquid rubber, plasticizer, processing aid, or filler, while the degree of crosslinking is controlled by varying the types or amounts of crosslinking agent and crosslinking activator.

Any sealant that shows adhesion may be used, including rubber compositions conventionally used to seal tire punctures. A butyl-based rubber is used as the rubber component constituting a main ingredient of the rubber composition. Examples of the butyl-based rubber include butyl rubber (IIR) and halogenated butyl rubbers (X-IIR) such as brominated butyl rubber (Br-IIR) and chlorinated butyl rubber (Cl-IIR). In view of fluidity and other properties, either butyl rubber or a halogenated butyl rubber, or both of them, may be suitably used. The butyl-based rubber is preferably in the form of pellets. Such a pelletized butyl-based rubber can be precisely and suitably supplied to a continuous kneading machine so that the sealant can be produced with high productivity.

The butyl-based rubber is preferably a halogenated butyl rubber. The crosslinking reaction of a halogenated butyl rubber tends to proceed better than that of non-halogenated butyl rubber, and crosslink density is more likely to increase. Thus, the use of a halogenated butyl rubber can advantageously increase viscosity and shear modulus at 95°C, thereby contributing to reduction in the difference between the shear moduli at 0°C and 95°C and the difference between the viscosities at 0°C and 95°C to provide low temperature dependence to the sealant. Further, the butyl-based rubber is particularly preferably a brominated butyl rubber because it is more effective to promote the crosslinking reaction.

To ensure more suitable sealing performance and fluidity of the sealant, the butyl-based rubber preferably has a Mooney viscosity $ML_{1+8}$ at 125°C of 20 to 60, more preferably 40 to 60. With a $ML_{1+8}$ of less than 20, fluidity may decrease. With a $ML_{1+8}$ of more than 60, sealing performance may decrease.

The Mooney viscosity $ML_{1+8}$ at 125°C is determined in accordance with JIS K-6300-1:2001 at a test temperature of 125°C using an L-type rotor with a preheating time of one minute and a rotation time of eight minutes.

The halogenated butyl rubber preferably has a halogen content of 0.1% to 5.0% by mass, more preferably 0.5% to 4.0% by mass. In this case, a more suitable effect can be obtained in promoting the crosslinking reaction, and the effects of the present invention can be more suitably achieved.

The halogen content may be measured by solution NMR.

The amount of the butyl-based rubber based on 100% by mass of the rubber component is preferably 80% by mass or more, more preferably 90% by mass or more, and may be 100% by mass. In this case, the effects of the present invention can be more suitably achieved.

In addition to the above-mentioned rubber, the rubber component may further include other rubbers. Examples include diene rubbers such as natural rubber (NR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR).

The sealant of the present invention preferably contains a liquid polymer.

Examples of the liquid polymer include liquid polybutenes, liquid polyisobutenes, liquid polyisoprenes, liquid polybutadienes, liquid poly-$\alpha$-olefins, liquid polyisobutylenes, liquid ethylene-$\alpha$-olefin copolymers, liquid ethylene-propylene copolymers, and liquid ethylene-butylene copolymers. In order to impart adhesion and other properties, liquid polybutenes are preferred among these. Examples of the liquid polybutenes include copolymers having a long-chain hydrocarbon molecular structure which is based on isobutene and further reacted with normal butene. Hydrogenated liquid polybutenes may also be used. Only a single liquid polymer may be used, or two or more liquid polymers may be used in combination.

In order to prevent the sealant from flowing during high-speed running, the liquid polymer (e.g. liquid polybutene) is preferably a liquid polymer A having a kinematic viscosity at 100°C of 550 to 625 $mm^2/s$ and/or a liquid polymer B having a kinematic viscosity at 100°C of 3540 to 4010 $mm^2/s$, more preferably a combination of the liquid polymers A and B.

The kinematic viscosity at 100°C of the liquid polymer A (e.g. liquid polybutene) is preferably 550 $mm^2/s$ or higher, more preferably 570 $mm^2/s$ or higher. When the kinematic viscosity is lower than 550 $mm^2/s$, flowing of the sealant may occur. The kinematic viscosity at 100°C is preferably 625 $mm^2/s$ or lower, more preferably 610 $mm^2/s$ or

lower. When the kinematic viscosity is higher than 625 mm$^2$/s, the sealant may have a higher viscosity and deteriorated extrudability.

The kinematic viscosity at 100°C of the liquid polymer B (e.g. liquid polybutene) is preferably 3600 mm$^2$/s or higher, more preferably 3650 mm$^2$/s or higher. When the kinematic viscosity is lower than 3540 mm$^2$/s, the sealant may have so low a viscosity that it can easily flow during use of the tire, resulting in deteriorated sealing performance or uniformity.

The kinematic viscosity at 100°C is preferably 3900 mm$^2$/s or lower, more preferably 3800 mm$^2$/s or lower. When the kinematic viscosity is higher than 4010 mm$^2$/s, sealing performance may be deteriorated.

The kinematic viscosity at 40°C of the liquid polymer A (e.g. liquid polybutene) is preferably 20000 mm$^2$/s or higher, more preferably 23000 mm$^2$/s or higher. When the kinematic viscosity is lower than 20000 mm$^2$/s, the sealant may be so soft that it can flow. The kinematic viscosity at 40°C is preferably 30000 mm$^2$/s or lower, more preferably 28000 mm$^2$/s or lower. When the kinematic viscosity is higher than 30000 mm$^2$/s, the sealant may have so high a viscosity that sealing performance can be deteriorated.

The kinematic viscosity at 40°C of the liquid polymer B (e.g. liquid polybutene) is preferably 120000 mm$^2$/s or higher, more preferably 150000 mm$^2$/s or higher. When the kinematic viscosity is lower than 120000 mm$^2$/s, the sealant may have so low a viscosity that it can easily flow during use of the tire, resulting in deteriorated sealing performance or uniformity.

The kinematic viscosity at 40°C is preferably 200000 mm$^2$/s or lower, more preferably 170000 mm$^2$/s or lower. When the kinematic viscosity is higher than 200000 mm$^2$/s, the sealant may have so high a viscosity that sealing performance can be deteriorated.

Only one type of liquid polymer may be used. In this case, the kinematic viscosity at 100°C of the liquid polymer is preferably 550 mm$^2$/s or higher, more preferably 560 mm$^2$/s or higher, still more preferably 570 mm$^2$/s or higher, particularly preferably 580 mm$^2$/s or higher, but is preferably 3900 mm$^2$/s or lower, more preferably 3000 mm$^2$/s or lower, still more preferably 1500 mm$^2$/s or lower, further preferably 1000 mm$^2$/s or lower, particularly preferably 750 mm$^2$/s or lower, most preferably 650 mm$^2$/s or lower.

Moreover, the kinematic viscosity at 40°C of the liquid polymer is preferably 20000 mm$^2$/s or higher, more preferably 21000 mm$^2$/s or higher, still more preferably 22500 mm$^2$/s or higher, particularly preferably 25000 mm$^2$/s or higher, but is preferably 200000 mm$^2$/s or lower, more preferably 100000 mm$^2$/s or lower, still more preferably 50000 mm$^2$/s or lower, particularly preferably 30000 mm$^2$/s or lower.

The kinematic viscosity is determined in accordance with JIS K 2283-2000 at 100°C or 40°C.

The amount of the liquid polymer (the combined amount of the liquid polymers A and B and other liquid polymers) per 100 parts by mass of the rubber component is preferably 50 parts by mass or more, more preferably 100 parts by mass or more, still more preferably 150 parts by mass or more. When the amount is less than 50 parts by mass, adhesion may be reduced. The amount is preferably 400 parts by mass or less, more preferably 300 parts by mass or less, still more preferably 250 parts by mass or less. When the amount is more than 400 parts by mass, flowing of the sealant may occur.

The blending ratio of the liquid polymers A and B, if used in combination, [(amount of liquid polymer A) / (amount of liquid polymer B)] is preferably 10/90 to 90/10, more preferably 30/70 to 70/30, still more preferably 40/60 to 60/40. When the blending ratio is within the above-mentioned range, good adhesion is imparted to the sealant.

In particular, the liquid polymer is preferably only one type of liquid polymer having a kinematic viscosity at 100°C of 550 to 3900 mm$^2$/s and a kinematic viscosity at 40°C of 20000 to 200000 mm$^2$/s used in the amount indicated above. When such a type of liquid polymer is used in the above amount, the viscosity at 0°C, viscosity at 95°C, shear modulus at 0°C, and shear modulus at 95°C of the sealant each fall within the above predetermined range, and the effects of the present invention can be more suitably achieved.

The organic peroxide (crosslinking agent) may be any conventionally known compound. Adhesion, sealing performance, fluidity, and processability are improved when a butyl-based rubber and a liquid polymer are used in an organic peroxide crosslinking system.

Examples of the organic peroxide include acyl peroxides such as benzoyl peroxide, dibenzoyl peroxide, and p-chlorobenzoyl peroxide; peroxyesters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; and dicumyl peroxide and t-butylcumyl peroxide. In view of adhesion and fluidity, acyl peroxides are preferred among these, with dibenzoyl peroxide being particularly preferred. The organic peroxide (crosslinking agent) is preferably used in the form of powder. Such a powdered organic peroxide (crosslinking agent) can be precisely and suitably supplied to a continuous kneading machine so that the sealant can be produced with high productivity.

As the amount of the organic peroxide (crosslinking agent) increases, the rubber crosslinking reaction tends to be accelerated to increase crosslink density, resulting in higher viscosity and shear modulus at 95°C. The amount of the organic peroxide per 100 parts by mass of the rubber component is preferably 0.5 parts by mass or more, more preferably 1 part by mass or more, still more preferably 5 parts by mass or more, particularly preferably 6 parts by mass or more. When the amount is less than 0.5 parts by mass, crosslink density may decrease so that flowing of the sealant may occur. The amount is preferably 40 parts by mass or less, more preferably 20 parts by mass or less, still more preferably 15 parts by mass or less, particularly preferably 12 parts by mass or less. When the amount is more than 40 parts by mass, crosslink density may excessively increase so that the sealant may become too hard and have lower sealing performance.

The crosslinking activator (vulcanization accelerator) may be at least one selected from the group consisting of sulfenamide, thiazole, thiuram, thiourea, guanidine, dithiocarbamate, aldehyde-amine, aldehyde-ammonia, imidazoline, and xanthate crosslinking activators and quinone dioxime compounds (quinoid compounds). For example, it may suitably be a quinone dioxime compound (quinoid compound). Adhesion, sealing performance, fluidity, and processability are improved when a butyl-based rubber and a liquid polymer are used in a crosslinking system including a crosslinking activator in addition to an organic peroxide.

Examples of the quinone dioxime compound include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di(m-bromobenzoate). In view of adhesion, sealing performance, and fluidity, p-benzoquinone dioxime is preferred among these. The crosslinking activator (vulcanization accelerator) is preferably used in the form of powder. Such a powdered crosslinking activator (vulcanization accelerator) can be precisely and suitably supplied to a continuous kneading machine so that the sealant can be produced with high productivity.

The crosslinking activator (vulcanization accelerator) may also suitably be zinc oxide. Adhesion, sealing performance, fluidity, and processability (especially sealing performance) are improved when a butyl-based rubber and a liquid polymer are used in a crosslinking system including an organic peroxide in which zinc oxide is used as a crosslinking activator.

As the amount of the crosslinking activator (e.g. quinone dioxime compound or zinc oxide) increases, the rubber crosslinking reaction tends to be accelerated to increase crosslink density, resulting in higher viscosity and shear modulus at 95°C. The amount of the crosslinking activator per 100 parts by mass of the rubber component is preferably 0.5 parts by mass or more, more preferably 1 part by mass or more, still more preferably 3 parts by mass or more, particularly preferably 5 parts by mass or more, most preferably 6 parts by mass or more. When the amount is less than 0.5 parts by mass, flowing of the sealant may occur. The amount is preferably 40 parts by mass or less, more preferably 20 parts by mass or less, still more preferably 15 parts by mass or less, particularly preferably 12 parts by mass or less. When the amount is more than 40 parts by mass, the sealant may have lower sealing performance.

The sealant may further contain a filler such as carbon black, silica, calcium carbonate, calcium silicate, magnesium oxide, aluminum oxide, barium sulfate, talc, or mica; a plasticizer such as an aromatic process oil, a naphthenic process oil, or a paraffinic process oil; and/or a processing aid such as a fatty acid metal salt, a fatty acid amide, an amide ester, a fatty acid ester, a mixture of a fatty acid metal salt and an amide ester, or a mixture of a fatty acid metal salt and a fatty acid amide.

To prevent degradation by ultraviolet rays, the filler is preferably carbon black. In this case, the amount of the carbon black per 100 parts by mass of the rubber component is preferably 1 part by mass or more, more preferably 10 parts by mass or more. When the amount is less than 1 part by mass, sealing performance may be reduced due to degradation by ultraviolet rays. The amount is preferably 50 parts by mass or less, more preferably 40 parts by mass or less, still more preferably 25 parts by mass or less. When the amount is more than 50 parts by mass, the sealant may have so high a shear modulus so that sealing performance may be deteriorated.

The filler may also suitably be silica. The use of silica as the filler particularly improves fluidity. The amount of the silica, if used, may be as described for the amount of the carbon black.

The amount of the plasticizer per 100 parts by mass of the rubber component is preferably 1 part by mass or more, more preferably 5 parts by mass or more. The sealant containing less than 1 part by mass of the plasticizer may have lower adhesion to tires and provide insufficient sealing performance. The amount is preferably 40 parts by mass or less, more preferably 20 parts by mass or less. The sealant containing more than 40 parts by mass of the plasticizer may be difficult to knead because it may slide in the kneading machine.

The amount of the processing aid per 100 parts by mass of the rubber component is preferably 1 part by mass or more, more preferably 5 parts by mass or more. The sealant containing less than 1 part by mass of the processing aid may have lower adhesion to tires and provide insufficient sealing performance. The amount is preferably 40 parts by mass or less, more preferably 20 parts by mass or less. The sealant containing more than 40 parts by mass of the processing aid may be difficult to knead because it may slide in the kneading machine.

The sealant is preferably prepared by mixing a pelletized butyl-based rubber, a powdered crosslinking agent, and a powdered crosslinking activator, and more preferably by mixing a pelletized butyl-based rubber, a liquid polybutene, a plasticizer and/or processing aid, carbon black and/or silica powder, a powdered crosslinking agent, and a powdered crosslinking activator. Such raw materials can be suitably supplied to a continuous kneading machine so that the sealant can be produced with high productivity.

The sealant is preferably obtained by incorporating predetermined amounts of a liquid polymer, an organic peroxide, and a crosslinking activator with a rubber component including a butyl-based rubber.

When the sealant combines a butyl rubber with a liquid polymer (e.g. liquid polybutene) which is especially a liquid polymer, it can achieve a balanced improvement in adhesion, sealing performance, fluidity, and processability. This is because the introduction of a liquid polymer component to an organic peroxide crosslinking system using a butyl rubber as the rubber component provides adhesion, and further the use of a liquid polybutene and a solid butyl rubber reduces flowing of the sealant during high-speed running, whereby the sealant can achieve a balanced improvement in adhesion, sealing performance, fluidity, and processability.

Moreover, when the sealant contains a butyl-based rubber and an organic peroxide, particularly when it contains a butyl-based rubber and predetermined amounts of an organic peroxide and a crosslinking activator, it may advantageously have a good balance of excellent sealing performance and fluidity.

The viscosity at 40°C of the sealant is not particularly limited. In view of adhesion and fluidity and in order to allow the sealant to suitably maintain a generally string shape upon application to the inner periphery of a tire, the viscosity at 40°C is preferably 3000 Pa·s or higher, more preferably 5000 Pa·s or higher, but is preferably 70000 Pa·s or lower, more preferably 50000 Pa·s or lower. If it is lower than 3000 Pa·s, the applied sealant may flow when the tire stops rotating and may not maintain the film thickness . Also, if it is higher than 70000 Pa·s, the sealant may be difficult to discharge from the nozzle.

The viscosity of the sealant is determined at 40°C in accordance with JIS K 6833 using a rotational viscometer.

A self-sealing tire including a sealant layer located radially inside the innerliner may be produced by preparing a sealant by mixing the above-mentioned materials, and applying the sealant to the inner periphery of a tire, and preferably to the radially inner side of the innerliner. The materials of the sealant may be mixed using a known continuous kneading machine, for example. In particular, they are preferably mixed using a co-rotating or counter-rotating multi-screw kneading extruder, especially a twin screw kneading extruder.

The continuous kneading machine (especially twin screw kneading extruder) preferably has a plurality of supply ports for supplying raw materials, more preferably at least three supply ports, still more preferably at least three supply ports including upstream, midstream, and downstream supply ports. By sequentially supplying the raw materials to the continuous kneading machine (especially twin screw kneading extruder), the raw materials are mixed and sequentially and continuously prepared into a sealant.

Preferably, the raw materials are sequentially supplied to the continuous kneading machine (especially twin screw kneading extruder), starting from the material having a higher viscosity. In this case, the materials can be sufficiently mixed and prepared into a sealant of a consistent quality. Moreover, powder materials, which improve kneadability, should be introduced as upstream as possible.

The organic peroxide is preferably supplied to the continuous kneading machine (especially twin screw kneading extruder) from its downstream supply port. In this case, the time period from supplying the organic peroxide to applying the sealant to a tire can be shortened so that the sealant can be applied to a tire before it is cured. This allows for more stable production of self-sealing tires.

Since kneading is unsuccessfully accomplished when a large amount of the liquid polymer is introduced at once into the continuous kneading machine (especially twin screw kneading extruder), the liquid polymer is preferably supplied to the continuous kneading machine (especially twin screw kneading extruder) through a plurality of supply ports. In this case, the sealant can be more suitably kneaded.

When a continuous kneading machine (especially twin screw kneading extruder) is used, the sealant is preferably prepared using the continuous kneading machine (especially twin screw kneading extruder) having at least three supply ports by supplying a rubber component such as a butyl-based rubber, a filler, and a crosslinking activator each from the upstream supply port, a liquid polymer from the midstream supply port, and an organic peroxide and a plasticizer and/or processing aid each from the downstream supply port of the continuous kneading machine (especially twin screw kneading extruder), followed by kneading and extrusion. The materials such as liquid polymers may be entirely or partially supplied from the respective supply ports. Preferably, at least 95% by mass of the total amount of each material is supplied from the supply port.

Preferably, all the raw materials to be introduced into the continuous kneading machine are introduced into the continuous kneading machine under the control of a quantitative feeder. This allows for continuous and automated preparation of the sealant.

Any feeder that can provide quantitative feeding may be used, including known feeders such as screw feeders, plunger pumps, gear pumps, and mohno pumps.

Solid raw materials (especially pellets or powder) such as butyl-based rubber pellets, carbon black or silica powder, crosslinking agent powder, and crosslinking activator powder are preferably quantitatively supplied using a screw feeder. This allows the solid raw materials to be supplied precisely in fixed amounts, thereby allowing for the production of a higher quality sealant and therefore a higher quality self-sealing tire.

Moreover, the solid raw materials are preferably individually supplied through separate respective feeders. In this case, the raw materials need not to be blended beforehand, which facilitates supply of the materials in the mass production.

The plasticizer and/or processing aid are preferably quantitatively supplied using a plunger pump. This allows the plasticizer and/or processing aid to be supplied precisely in a fixed amount, thereby allowing for the production of a higher quality sealant and therefore a higher quality self-sealing tire.

The liquid polymer is preferably quantitatively supplied using a gear pump. This allows the liquid polymer to be supplied precisely in a fixed amount, thereby allowing for the production of a higher quality sealant and therefore a higher quality self-sealing tire.

The liquid polymer to be supplied is preferably kept under constant temperature control. The constant temperature control allows the liquid polymer to be supplied more precisely in a fixed amount. The temperature of the liquid polymer to be supplied is preferably 20°C to 90°C, more preferably 40°C to 70°C.

In view of easy mixing, extrudability, and control of the rate of curing acceleration, the mixing in the continuous kneading machine (especially twin screw kneading extruder) is preferably carried out at a barrel temperature of 30°C (preferably 50°C) to 150°C.

In view of sufficient mixing, preferably, the materials supplied upstream are mixed for 1 to 3 minutes, and the materials supplied midstream are mixed for 1 to 3 minutes, while the materials supplied downstream are preferably mixed for 0.5 to 2 minutes in order to avoid (control) crosslinking. The times for mixing the materials each refer to the residence time in the continuous kneading machine (especially twin screw kneading extruder) from supply to discharge. For example, the time for mixing the materials supplied downstream means the residence time from when they are supplied through the downstream supply port until they are discharged.

By varying the screw rotational speed of the continuous kneading machine (especially twin screw kneading extruder) or the setting of the temperature controller, it is possible to control the temperature of the sealant discharged from the outlet and therefore the rate of curing acceleration of the sealant, thereby providing good fluidity to the sealant. As the screw rotational speed of the continuous kneading machine (especially twin screw kneading extruder) increases, kneadability and material temperature increase. The screw rotational speed does not affect the discharge amount. In view of sufficient mixing and control of the rate of curing acceleration, the screw rotational speed is preferably 50 to 700 (preferably 550) rpm. In view of sufficient mixing, plasticity, and control of the rate of curing acceleration, the pressure inside the continuous kneading machine (especially twin screw kneading extruder) is preferably 1.0 to 10.0 MPa.

In view of sufficient mixing and control of the rate of curing acceleration, the temperature of the sealant discharged from the outlet of the continuous kneading machine (especially twin screw kneading extruder) is preferably 70°C to 150°C, more preferably 90°C to 130°C. When the temperature of the sealant is within the above range, the crosslinking reaction begins upon the application of the sealant and the sealant adheres well to the inner periphery of a tire and, at the same time, the crosslinking reaction more suitably proceeds, whereby a self-sealing tire having high sealing performance can be produced. Moreover, the crosslinking step described later is not required in this case.

The amount of the sealant discharged from the outlet of the continuous kneading machine (especially twin screw kneading extruder) is determined according to the amounts of the raw materials supplied through the supply ports. The amounts of the raw materials supplied through the supply ports are not particularly limited, and a person skilled in the art may appropriately select the amounts. To suitably produce a self-sealing tire having much better uniformity and sealing performance, preferably a substantially constant amount (discharge amount) of the sealant is discharged from the outlet.

Herein, the substantially constant discharge amount means that the discharge amount varies within a range from 93% to 107%, preferably from 97% to 103%, more preferably from 98% to 102%, still more preferably from 99% to 101%.

The outlet of the continuous kneading machine (especially twin screw kneading extruder) is preferably connected to a nozzle. Since the continuous kneading machine (especially twin screw kneading extruder) can discharge the materials at a high pressure, the prepared sealant may be attached in a thin, generally string shape (bead shape) to a tire by means of a nozzle (preferably a small diameter nozzle creating high resistance) mounted on the outlet. Specifically, by discharging the sealant from a nozzle connected to the outlet of the continuous kneading machine (especially twin screw kneading extruder) to sequentially apply it to the inner periphery of a tire, the applied sealant has a substantially constant thickness, thereby preventing deterioration of tire uniformity. This allows for the production of a self-sealing tire that is excellent in weight balance.

Next, for example, the mixed sealant is discharged from the nozzle connected to the outlet of the extruder such as a continuous kneading machine (especially twin screw kneading extruder) to feed and apply the sealant directly to the inner periphery of a vulcanized tire, whereby a self-sealing tire can be produced. In this case, since the sealant which has been mixed in, for example, a twin screw kneading extruder and in which the crosslinking reaction in the extruder is suppressed is directly applied to the tire inner periphery, the crosslinking reaction of the sealant begins upon the application and the sealant adheres well to the tire inner periphery and, at the same time, the crosslinking reaction suitably proceeds. Thus, the sealant applied to the tire inner periphery forms a sealant layer while suitably maintaining a generally string shape. Accordingly, it is possible to apply and process the sealant in a series of steps which improves productivity. Moreover, since the sealant is applied to the inner periphery of a vulcanized tire, the productivity of self-sealing tires can be further enhanced. Furthermore, the sealant discharged from the nozzle connected to the outlet of the continuous kneading machine (especially twin screw kneading extruder) is preferably sequentially applied directly to the tire inner periphery. In this case, since the sealant in which the crosslinking reaction in the continuous kneading machine (especially twin screw kneading extruder) is suppressed is directly and continuously applied to the tire inner periphery, the crosslinking reaction of the sealant begins upon the application and the sealant adheres well to the tire inner periphery and, at the same time, the crosslinking reaction suitably proceeds, whereby a self-sealing tire that is excellent in weight balance can be produced with higher productivity.

With regard to the application of the sealant to the inner periphery of a tire, the sealant may be applied at least to the tire inner periphery that corresponds to a tread portion, and more preferably at least to the tire inner periphery that corresponds to a breaker. Omitting the application of the sealant to areas where the sealant is unnecessary further enhances the productivity of self-sealing tires.

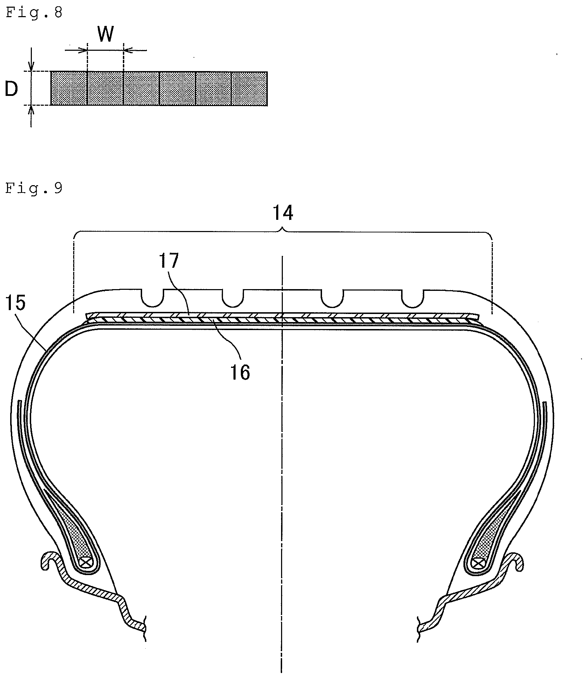

The tire inner periphery that corresponds to a tread portion refers to a portion of the inner periphery of a tire that is located radially inside a tread portion which contacts the road surface. The tire inner periphery that corresponds to a breaker refers to a portion of the inner periphery of a tire that is located radially inside a breaker. The breaker refers to a component placed inside the tread and radially outside the carcass. Specifically, it is a component as shown as a breaker 16 in Fig. 9, for example.

Unvulcanized tires are usually vulcanized using bladders. During the vulcanization, such a bladder inflates and closely attaches to the inner periphery (innerliner) of the tire. Hence, a mold release agent is usually applied to the inner periphery (innerliner) of the tire to avoid adhesion between the bladder and the inner periphery (innerliner) of the tire after completion of the vulcanization.

The mold release agent is usually a water-soluble paint or a mold-releasing rubber. However, the presence of the mold release agent on the inner periphery of the tire may impair adhesion between the sealant and the inner periphery of the tire. For this reason, it is preferred to previously remove the mold release agent from the inner periphery of the tire. In particular, the mold release agent is more preferably previously removed at least from a portion of the tire inner periphery in which application of the sealant starts. Still more preferably, the mold release agent is previously removed from the entire area of the tire inner periphery where the sealant is to be applied. In this case, the sealant adheres better to the tire inner periphery and therefore a self-sealing tire having higher sealing performance can be produced.

The mold release agent may be removed from the tire inner periphery by any method, including known methods such as buffing treatment, laser treatment, high pressure water washing, and removal with detergents and preferably with neutral detergents.

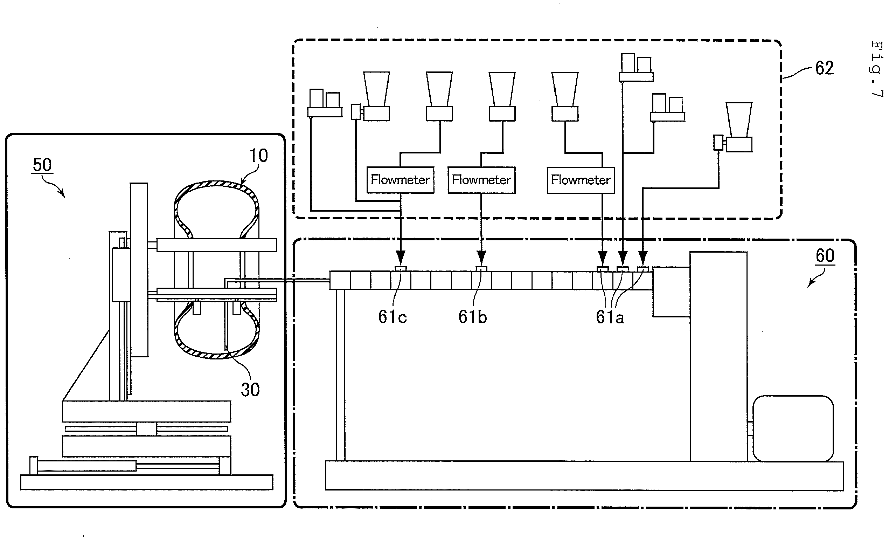

An example of a production facility used in a method for producing a self-sealing tire will be briefly described below referring to Fig. 7.

The production facility includes a twin screw kneading extruder 60, a material feeder 62 for supplying raw materials to the twin screw kneading extruder 60, and a rotary drive device 50 which fixes and rotates a tire 10 while moving the tire in the width and radial directions of the tire. The twin screw kneading extruder 60 has five supply ports 61, specifically, including three upstream supply ports 61a, one midstream supply port 61b, and one downstream supply port 61c. Further, the outlet of the twin screw kneading extruder 60 is connected to a nozzle 30.

The raw materials are sequentially supplied from the material feeder 62 to the twin screw kneading extruder 60 through the supply ports 61 of the twin screw kneading extruder 60 and then kneaded in the twin screw kneading extruder 60 to sequentially prepare a sealant. The prepared sealant is continuously discharged from the nozzle 30 connected to the outlet of the twin screw kneading extruder 60. The tire is traversed and/or moved up and down (or moved in the width direction and/or the radial direction of the tire) while being rotated by the tire drive device, and the sealant discharged from the nozzle 30 is sequentially applied directly to the inner periphery of the tire, whereby the sealant can be continuously and spirally attached to the tire inner periphery. In other words, the sealant may be continuously and spirally attached to the inner periphery of a tire by sequentially applying the sealant continuously discharged from the continuous kneading machine (especially twin screw kneading extruder) directly to the inner periphery of the tire while rotating the tire and simultaneously moving it in the width direction and/or the radial direction of the tire.

Such a continuous and spiral attachment of the sealant to the tire inner periphery can prevent deterioration of tire uniformity, thereby allowing for the production of a self-sealing tire excellent in weight balance. Moreover, the continuous and spiral attachment of the sealant to the tire inner periphery allows for the formation of a sealant layer in which the sealant is uniformly provided in the circumferential and width directions of the tire, and especially in the circumferential direction of the tire. This allows for stable production of self-sealing tires having excellent sealing performance with high productivity. The sealant is preferably attached without overlapping in the width direction and more preferably without gaps. In this case, the deterioration of tire uniformity can be further prevented and a more uniform sealant layer can be formed.

Moreover, the raw materials are sequentially supplied to the continuous kneading machine (especially twin screw kneading extruder) which sequentially prepares a sealant, which is then continuously discharged from the nozzle connected to the outlet of the continuous kneading machine (especially twin screw kneading extruder), and sequentially applied directly to the inner periphery of the tire. This process allows for production of self-sealing tires with high productivity.

The sealant layer is preferably formed by continuously and spirally applying a generally string-shaped sealant to the inner periphery of a tire. In this case, a sealant layer formed of a generally string-shaped sealant provided continuously and spirally along the inner periphery of a tire is formed on the inner periphery of the tire. The sealant layer may be formed of layers of the sealant, but preferably consists of one layer of the sealant.

When the sealant has a generally string shape, a sealant layer consisting of one layer of the sealant may be formed by continuously and spirally applying the sealant to the inner periphery of a tire. In the case of a generally string-shaped sealant, since the applied sealant has a certain thickness, even a sealant layer consisting of one layer of the sealant can prevent deterioration of tire uniformity, thereby allowing for the production of a self-sealing tire having an excellent weight balance and good sealing performance. Moreover, since it is sufficient to only apply one layer of the sealant without stacking layers of the sealant, self-sealing tires can be produced with higher productivity.

Thus, a pneumatic tire (self-sealing tire) including a sealant layer which has a particularly good balance of excellent sealing performance and fluidity can be stably produced with high productivity by using, as a sealant, the rubber composition for pneumatic tires (rubber composition for self-sealing tires or sealant) of the present invention having the above predetermined viscosity and elastic modulus properties, and continuously and spirally applying the sealant having a generally string shape to the inner periphery of a tire to form a sealant layer.

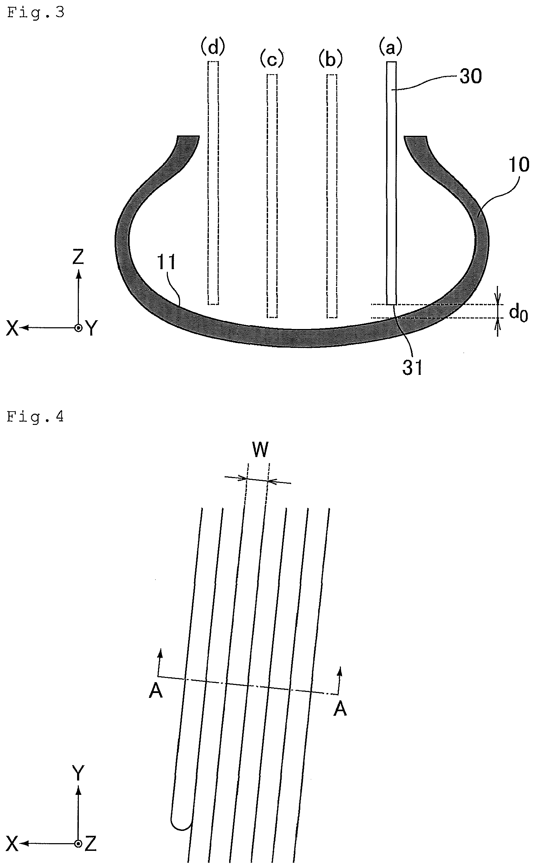

The number of turns of the sealant around the inner periphery of the tire is preferably 20 to 70, more preferably 20 to 60, still more preferably 35 to 50, because then the deterioration of tire uniformity can be prevented and a self-sealing tire having an excellent weight balance and good sealing performance can be produced with higher productivity. Here, two turns means that the sealant is applied such that it makes two laps around the inner periphery of the tire. In Fig. 4, the number of turns of the sealant is six.

The use of a continuous kneading machine (especially twin screw kneading extruder) enables the preparation (kneading) of a sealant and the discharge (application) of the sealant to be simultaneously and continuously performed. Thus, it allows a highly viscous and adhesive sealant which is difficult to handle to be directly applied to the inner periphery of a tire without handling it, and therefore self-sealing tires can be produced with high productivity. If a sealant is prepared by kneading with a curing agent in a batch kneading machine, the time period from preparing a sealant to attaching the sealant to a tire is not constant. In contrast, by sequentially preparing a sealant by mixing raw materials including an organic peroxide using a continuous kneading machine (especially twin screw kneading extruder), and sequentially applying the sealant to the inner periphery of a tire, the time period from preparing a sealant to attaching the sealant to a tire is held constant. For this reason, when the sealant is applied through a nozzle, the amount of the sealant discharged from the nozzle is stable; moreover, the sealant shows consistent adhesion while reducing the deterioration of adhesion to the tire, and even a highly viscous and adhesive sealant which is difficult to handle can be precisely applied to the tire inner periphery. Therefore, self-sealing tires of a consistent quality can be stably produced.

The following describes methods for applying the sealant to the inner periphery of a tire.

<First embodiment>

A first embodiment of a self-sealing tire may be produced, for example, by performing the steps (1), (2), and (3) below in the process of applying an adhesive sealant through a nozzle to the inner periphery of a tire while rotating the tire and simultaneously moving the tire and/or nozzle in the width direction of the tire: step (1) of measuring the distance between the inner periphery of the tire and the tip of the nozzle using a non-contact displacement sensor; step (2) of moving the tire and/or nozzle in the radial direction of the tire according to the data to adjust the distance between the inner periphery of the tire and the tip of the nozzle to a predetermined length; and step (3) of applying the sealant to the inner periphery of the tire after the distance is adjusted.

The distance between the inner periphery of the tire and the tip of the nozzle may be maintained at a constant length by measuring the distance between the inner periphery of the tire and the tip of the nozzle using a non-contact displacement sensor and feeding back the data. Moreover, since the sealant is applied to the tire inner periphery while maintaining the distance at a constant length, the applied sealant has a uniform thickness without being affected by variations in tire shape and irregularities at joint or other portions. Furthermore, since it is not necessary to enter the coordinate data of each tire having a different size as in the conventional art, the sealant can be efficiently applied.

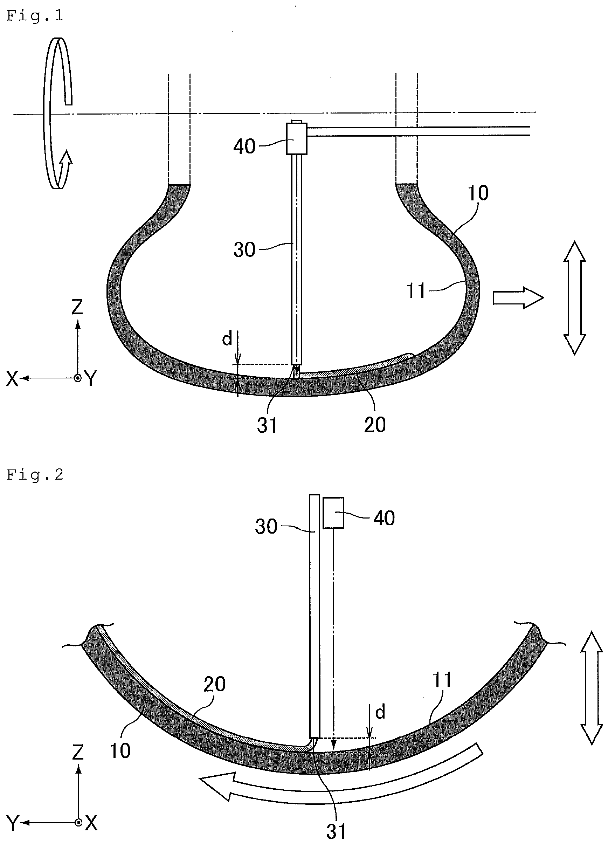

Fig. 1 is an explanatory view schematically showing an example of an applicator used in a method for producing a self-sealing tire of the present invention, and Fig. 2 is an enlarged view showing the vicinity of the tip of the nozzle included in the applicator shown in Fig. 1.

Fig. 1 shows a cross-section of a part of a tire 10 in the meridional direction (a cross-section taken along a plane including the width and radial directions of the tire). Fig. 2 shows a cross-section of a part of the tire 10 taken along a plane including the circumferential and radial directions of the tire. In Figs. 1 and 2, the width direction (axis direction) of the tire is indicated by arrow X, the circumferential direction of the tire is indicated by arrow Y, and the radial direction of the tire is indicated by arrow Z.

The tire 10 is mounted on a rotary drive device (not shown) which fixes and rotates a tire while moving the tire in the width and radial directions of the tire. The rotary drive device allows for the following independent operations: rotation around the axis of the tire, movement in the width direction of the tire, and movement in the radial direction of the tire.

The rotary drive device includes a controller (not shown) capable of controlling the amount of movement in the tire radial direction. The controller may be capable of controlling the amount of movement in the tire width direction and/or the rotational speed of the tire.

A nozzle 30 is attached to the tip of an extruder (not shown) and can be inserted into the inside of the tire 10. Then an adhesive sealant 20 extruded from the extruder is discharged from the tip 31 of the nozzle 30.

A non-contact displacement sensor 40 is attached to the nozzle 30 to measure the distance d between the inner periphery 11 of the tire 10 and the tip 31 of the nozzle 30.

Thus, the distance d to be measured by the non-contact displacement sensor is the distance in the tire radial direction between the inner periphery of the tire and the tip of the nozzle.

According to the method for producing a self-sealing tire of the present invention, the tire 10 formed through a vulcanization step is first mounted on the rotary drive device, and the nozzle 30 is inserted into the inside of the tire 10. Then, as shown in Figs. 1 and 2, the tire 10 is rotated and simultaneously moved in the width direction while the sealant 20 is discharged from the nozzle 30, whereby the sealant is continuously applied to the inner periphery 11 of the tire 10. The tire 10 is moved in the width direction according to the pre-entered profile of the inner periphery 11 of the tire 10.

The sealant 20 preferably has a generally string shape as described later. More specifically, the sealant preferably maintains a generally string shape when it is applied to the inner periphery of the tire. In this case, the generally string-shaped sealant 20 is continuously and spirally attached to the inner periphery 11 of the tire 10.

The generally string shape as used herein refers to a shape having a certain width, a certain thickness, and a length longer than the width. Fig. 4 schematically shows an example of a generally string-shaped sealant continuously and spirally attached to the inner periphery of a tire, and Fig. 8 schematically shows an example of a cross-section of the sealant shown in Fig. 4 when the sealant is cut along the A-A straight line orthogonal to the direction along which the sealant is applied (longitudinal direction). Thus, the generally string-shaped sealant has a certain width (length indicated by W in Fig. 8) and a certain thickness (length indicated by D in Fig. 8). The width of the sealant means the width of the applied sealant. The thickness of the sealant means the thickness of the applied sealant, more specifically the thickness of the sealant layer.

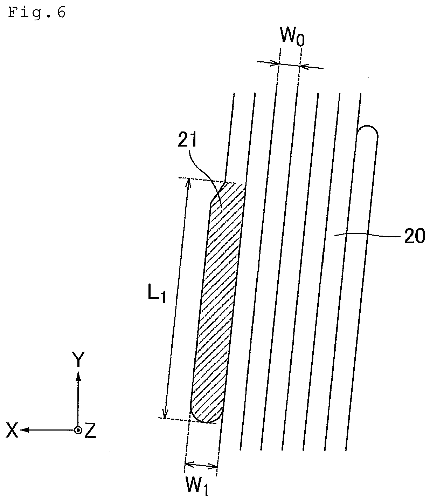

Specifically, the generally string-shaped sealant is a sealant having a thickness (thickness of the applied sealant or the sealant layer, length indicated by D in Fig. 8) satisfying a preferable numerical range and a width (width of the applied sealant, length indicated by W in Fig. 4 or $W_0$ in Fig. 6) satisfying a preferable numerical range as described later, and more preferably a sealant having a ratio of the thickness to the width of the sealant [(thickness of sealant)/(width of sealant)] satisfying a preferable numerical range as described later. The generally string-shaped sealant is also a sealant having a cross-sectional area satisfying a preferable numerical range as described later.

According to the method for producing a self-sealing tire of the present invention, the sealant is applied to the inner periphery of a tire by the following steps (1) to (3).

<Step (1)>

As shown in Fig. 2, the distance d between the inner periphery 11 of the tire 10 and the tip 31 of the nozzle 30 is measured with the non-contact displacement sensor 40 before the application of the sealant 20. The distance d is measured upon every application of the sealant 20 to the inner periphery 11 of each tire 10, and from the start to the end of application of the sealant 20.

<Step (2)>

The distance d data is transmitted to the controller of the rotary drive device. According to the data, the controller controls the amount of movement in the tire radial direction so that the distance between the inner periphery 11 of the tire 10 and the tip 31 of the nozzle 30 is adjusted to a predetermined length.

<Step (3)>

Since the sealant 20 is continuously discharged from the tip 31 of the nozzle 30, it is then applied to the inner periphery 11 of the tire 10 after the above distance is adjusted. Through the above steps (1) to (3), the sealant 20 having a uniform thickness can be applied to the inner periphery 11 of the tire 10.

Fig. 3 is an explanatory view schematically showing the positional relationship of the nozzle to the tire.

In the present invention, as shown in Fig. 3, the sealant may be applied while maintaining the distance between the inner periphery 11 of the tire 10 and the tip 31 of the nozzle 30 at a predetermined distance ($d_0$) during the movement of the nozzle 30 to positions (a) to (d) relative to the tire 10.

To more suitably achieve the effects of the present invention, the adjusted distance $d_0$ is preferably 0. 3 mm or more, more preferably 1.0 mm or more. When the distance is less than 0.3 mm, the tip of the nozzle is too close to the inner periphery of the tire, which makes it difficult to allow the applied sealant to have a predetermined thickness. The adjusted distance $d_0$ is also preferably 3.0 mm or less, more preferably 2.0 mm or less. When the distance is more than 3.0 mm, the sealant may not be attached well to the tire, thereby resulting in reduced production efficiency.

The adjusted distance $d_0$ refers to the distance in the tire radial direction between the inner periphery of the tire and the tip of the nozzle after the distance is adjusted in step (2) .

To more suitably achieve the effects of the present invention, the adjusted distance $d_0$ is preferably 30% or less, more preferably 20% or less of the thickness of the applied sealant. The adjusted distance $d_0$ is also preferably 5% or more, more preferably 10% or more of the thickness of the applied sealant.

The thickness of the sealant (the thickness of the applied sealant or the sealant layer, length indicated by D in Fig. 8) is not particularly limited. In order to more suitably achieve the effects of the present invention, the thickness of the sealant is preferably 1.0 mm or more, more preferably 1.5 mm or more, still more preferably 2.0 mm or more, particularly preferably 2.5 mm or more, but is preferably 10 mm or less, more preferably 8.0 mm or less, still more preferably 5. 0 mm or less. When the thickness is less than 1.0 mm, a puncture hole, if formed in the tire, is difficult to reliably seal. Also, a thickness of more than 10 mm is not preferred because tire weight increases, although with little improvement in the effect of sealing puncture holes. The thickness of the sealant may be controlled by varying the rotational speed of the tire, the velocity of movement in the tire width direction, the distance between the tip of the nozzle and the inner periphery of the tire, or other factors.

The sealant preferably has a substantially constant thickness (thickness of the applied sealant or the sealant layer) . In this case, the deterioration of tire uniformity can be further prevented and a self-sealing tire having a much better weight balance can be produced.

The substantially constant thickness as used herein means that the thickness varies within a range from 90% to 110%, preferably from 95% to 105%, more preferably from 98% to 102%, still more preferably from 99% to 101%.

In order to reduce clogging of the nozzle so that excellent operational stability can be obtained and to more suitably achieve the effects of the present invention, a generally string-shaped sealant is preferably used in the present invention and is more preferably spirally attached to the inner periphery of the tire. However, a sealant not having a generally string shape may also be used and applied by spraying onto the tire inner periphery.

In the case of a generally string-shaped sealant, the width of the sealant (width of the applied sealant, length indicated by W in Fig. 4) is not particularly limited. In order to more suitably achieve the effects of the present invention, the width of the sealant is preferably 0.8 mm or more, more preferably 1.3 mm or more, still more preferably 1.5 mm or more. When the width is less than 0.8 mm, the number of turns of the sealant around the tire inner periphery may increase, reducing production efficiency. The width of the sealant is also preferably 18 mm or less, more preferably 13 mm or less, still more preferably 9.0 mm or less, particularly preferably 7.0 mm or less, most preferably 6.0 mm or less, even most preferably 5.0 mm or less. When the width is more than 18 mm, a weight imbalance may be more likely to occur.

The ratio of the thickness of the sealant (the thickness of the applied sealant or the sealant layer, length indicated by D in Fig. 8) to the width of the sealant (the width of the applied sealant, length indicated by W in Fig. 4) [(thickness of sealant) / (width of sealant)] is preferably 0.6 to 1.4, more preferably 0.7 to 1.3, still more preferably 0.8 to 1.2, particularly preferably 0.9 to 1.1. A ratio closer to 1.0 results in a sealant having an ideal string shape which allows for the production of a self-sealing tire having high sealing performance with higher productivity.

To more suitably achieve the effects of the present invention, the cross-sectional area of the sealant (the cross-sectional area of the applied sealant, area calculated by $D \times W$ in Fig. 8) is preferably 0.8 mm$^2$ or more, more preferably 1.95 mm$^2$ or more, still more preferably 3.0 mm$^2$ or more, particularly preferably 3.75 mm$^2$ or more, but is preferably 180 mm$^2$ or less, more preferably '104 mm$^2$ or less, still more preferably 45 mm$^2$ or less, particularly preferably 35 mm$^2$ or less, most preferably 25 mm$^2$ or less.

The width of the area where the sealant is attached (hereinafter also referred to as the width of the attachment area or the width of the sealant layer, and corresponding to a length equal to $6 \times W$ in Fig. 4 or a length equal to $W_1 + 6 \times W_0$ in Fig. 6) is not particularly limited. In order to more suitably achieve the effects of the present invention, the width is preferably 80% or more, more preferably 90% or more, still more preferably 100% or more, but preferably 120% or less, more preferably 110% or less, of the tread contact width.

To more suitably achieve the effects of the present invention, the width of the sealant layer is preferably 85% to 115%, more preferably 95% to 105% of the width of the breaker of the tire (the length of the breaker in the tire width direction).

Herein, when the tire is provided with a plurality of breakers, the length of the breaker in the tire width direction refers to the length in the tire width direction of the breaker that is the longest in the tire width direction, among the plurality of breakers.

Herein, the tread contact width is defined as follows. First, a no-load and normal condition tire with a normal internal pressure mounted on a normal rim is contacted with a plane at a camber angle of 0 degrees while a normal load is applied to the tire, and then the axially outermost contact positions of the tire are each defined as "contact edge Te". The distance between the contact edges Te and Te in the tire axis direction is defined as "tread contact width TW". The dimensions and other characteristics of tire components are determined under the above normal conditions, unless otherwise stated.

The "normal rim" refers to a rim specified for each tire by the standards in a standard system including standards according to which tires are provided, and may be "standard rim" in JATMA, "design rim" in TRA, or "measuring rim" in ETRTO. The "normal internal pressure" refers to an air pressure specified for each tire by the standards in a standard system including standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO. In the case of tires for passenger vehicles, the normal internal pressure is 180 kPa.

The "normal load" refers to a load specified for each tire by the standards in a standard system including standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO. In the case of tires for passenger vehicles, the normal load is 88% of the above-specified load.

The rotational speed of the tire during the application of the sealant is not particularly limited. In order to more suitably achieve the effects of the present invention, the rotational speed is preferably 5 m/min or higher, more preferably 10 m/min or higher, but is preferably 30 m/min or lower, more preferably 20 m/min or lower. When the rotational speed is lower than 5 m/min or higher than 30 m/min, a sealant having a uniform thickness cannot be easily applied.

When a non-contact displacement sensor is used in the present invention, the risk of troubles caused by adhesion of the sealant to the sensor can be reduced. The non-contact displacement sensor used is not particularly limited as long as the sensor can measure the distance between the inner periphery of the tire and the tip of the nozzle. Examples include laser sensors, photosensors, and capacitance sensors. These sensors may be used alone or in combinations of two or more. For measurement of rubber, laser sensors or photosensors are preferred among these, with laser sensors being more preferred. When a laser sensor is used, the distance between the inner periphery of the tire and the tip of the nozzle may be determined as follows: the inner periphery of the tire is irradiated with a laser; the distance between the inner periphery of the tire and the tip of the laser sensor is determined based on the reflection of the laser; and the distance between the tip of the laser sensor and the tip of the nozzle is subtracted from the determined distance.

The location of the non-contact displacement sensor is not particularly limited as long as the distance between the inner periphery of the tire and the tip of the nozzle before the application of the sealant can be measured. The sensor is preferably attached to the nozzle, more preferably in a location to which the sealant will not adhere.

The number, size, and other conditions of the non-contact displacement sensor are also not particularly limited.

Since the non-contact displacement sensor is vulnerable to heat, the sensor is preferably protected with a heat insulator or the like and/or cooled with air or the like to avoid the influence of heat from the hot sealant discharged from the nozzle. This improves the durability of the sensor.

Although the first embodiment has been described based on an example in which the tire, not the nozzle, is moved in the width and radial directions of the tire, the nozzle, not the tire, may be moved, or both the tire and the nozzle may be moved.

The rotary drive device preferably includes a means to increase the width of a tire at a bead portion. In the application of the sealant to a tire, increasing the width of the tire at a bead portion allows the sealant to be easily applied to the tire. Particularly when the nozzle is introduced near the inner periphery of the tire mounted on the rotary drive device, the nozzle may be introduced only by parallel movement of the nozzle, which facilitates the control and improves productivity.

Any means that can increase the width of a tire at a bead portion can be used as the means to increase the width of a tire at a bead portion. Examples include a mechanism in which two devices each having a plurality of (preferably two) rolls which have a fixed positional relationship with each other are used, and the devices move in the tire width direction. The devices may be inserted from both sides through the opening of the tire into the inside of the tire and allowed to increase the width of the tire at a bead portion.

In the production method, since the sealant which has been mixed in, for example, a twin screw kneading extruder and in which the crosslinking reaction in the extruder is suppressed is directly applied to the tire inner periphery, the crosslinking reaction begins upon the application and the sealant adheres well to the tire inner periphery and, at the same time, the crosslinking reaction more suitably proceeds, whereby a self-sealing tire having high sealing performance can be produced. Thus, the self-sealing tire with the sealant applied thereto does not need further crosslinking, thereby offering good productivity.

In the present invention, the self-sealing tire with the sealant applied thereto may be further subjected to a crosslinking step, if necessary.

The self-sealing tire is preferably heated in the crosslinking step. This improves the rate of crosslinking of the sealant and allows the crosslinking reaction to more suitably proceed so that the productivity of self-sealing tires can be further enhanced. The tire may be heated by any method, including known methods, but it may suitably be heated in an oven. The crosslinking step may be carried out, for example, by placing the self-sealing tire in an oven at 70°C to 190°C, preferably 150°C to 190°C, for 2 to 15 minutes.

The tire is preferably rotated in the circumferential direction of the tire during the crosslinking because then flowing of even the just-applied, easily flowing sealant can be prevented and the crosslinking reaction can be accomplished without deterioration of uniformity. The rotational speed is preferably 300 to 1,000 rpm. Specifically, the oven used may be, for example, an oven equipped with a rotational mechanism.

Even when the crosslinking step is not additionally performed, the tire is preferably rotated in the circumferential direction of the tire until the crosslinking reaction of the sealant is completed. In this case, flowing of even the just-applied, easily flowing sealant can be prevented and the crosslinking reaction can be accomplished without deterioration of uniformity. The rotational speed is the same as described for the crosslinking step.

To improve the rate of crosslinking of the sealant, the tire is preferably previously warmed before the application of the sealant. This allows for the production of self-sealing tires with higher productivity. The temperature for pre-heating the tire is preferably 40°C to 100°C, more preferably 50°C to 70°C. When the tire is pre-heated within the above temperature range, the crosslinking reaction suitably begins upon the application and more suitably proceeds so that a self-sealing tire having high sealing performance can be produced. Moreover, when the tire is pre-heated within the above temperature range, the crosslinking step is not necessary and thus the productivity of self-sealing tires can be enhanced.

In general, continuous kneading machines (especially twin screw kneading extruders) are continuously operated. In the production of self-sealing tires, however, tires need to be replaced one after another upon completion of the application of the sealant to one tire. Here, in order to produce higher quality self-sealing tires while reducing deterioration of productivity, the following method (1) or (2) may be used. The method (1) or (2) may be appropriately selected depending on the situation, in view of the following disadvantages: deterioration in quality in method (1) and an increase in cost in method (2).

(1) The feed of the sealant to the inner periphery of the tire is controlled by running or stopping the continuous kneading machine and all the feeders simultaneously.

Specifically, upon completion of the application to one tire, the continuous kneading machine and all the feeders may be simultaneously stopped, the tire may be replaced with another tire, preferably within one minute, and the continuous kneading machine and all the feeders may be simultaneously allowed to run to restart the application to the tire. By replacing tires quickly, preferably within one minute, the deterioration in quality can be reduced.

(2) The feed of the sealant to the inner periphery of the tire is controlled by switching flow channels while allowing the continuous kneading machine and all the feeders to keep running.

Specifically, the continuous kneading machine may be provided with another flow channel in addition to the nozzle for direct feeding to the tire inner periphery, and the prepared sealant may be discharged from the another flow channel after completion of the application to one tire until completion of the replacement of tires. According to this method, since self-sealing tires can be produced while the continuous kneading machine and all the feeders are kept running, the produced self-sealing tires can have higher quality.

Non-limiting examples of carcass cords that can be used in the carcass of the self-sealing tire according to the present invention include fiber cords and steel cords. Steel cords are preferred among these. In particular, steel cords formed of hard steel wire materials specified in JIS G 3506 are desirable. The use of strong steel cords, instead of commonly used fiber cords, as carcass cords in the self-sealing tire greatly improves side cut resistance (resistance to cuts in the tire side portions due to driving over curbs or other reasons), thereby further improving the puncture resistance of the entire tire including the side portions.

The steel cords may have any structure. Examples include steel cords having a $1 \times n$ single strand structure, steel cords having a $k + m$ layered strand structure, steel cords having a $1 \times n$ bundle structure, and steel cords having an $m \times n$ multi-strand structure. The term "steel cord having a $1 \times n$ single strand structure" refers to a single-layered twisted steel cord formed by intertwining n filaments. The term "steel cord having a $k + m$ layered strand structure" refers to a steel cord having a two-layered structure in which the two layers are different from each other in twist direction and twist pitch, and the inner layer includes k filaments while the outer layer includes m filaments. The term "steel cord having a 1 × n bundle structure" refers to a bundle steel cord formed by intertwining bundles of n filaments. The term "steel cord having an m × n multi-strand structure" refers to a multi-strand steel cord formed by intertwining m strands produced by first twisting n filaments together. Here, n represents an integer of 1 to 27; k represents an integer of 1 to 10; and m represents an integer of 1 to 3.

The twist pitch of the steel cords is preferably 13 mm or less, more preferably 11 mm or less, but is preferably 5 mm or more, more preferably 7 mm or more.

The steel cords preferably each contain at least one preformed filament formed in the shape of a spiral. Such a preformed filament provides a relatively large gap within the steel cord to improve rubber permeability, and further maintains the elongation under low load so that a molding failure can be prevented during vulcanization.

The surface of the steel cords is preferably plated with brass, Zn, or other materials to improve initial adhesion to the rubber composition.

The steel cords preferably have an elongation under a load of 50 N of 0.5% to 1.5%. When the elongation under a load of 50 N is more than 1.5%, the reinforcing cords may exhibit reduced elongation under high load and thus disturbance absorption may not be maintained. Conversely, when the elongation under a load of 50 N is less than 0.5%, the cords may not show sufficient elongation during vulcanization, thereby resulting in a molding failure. In view of the above, the elongation under a load of 50 N is more preferably 0.7% or more, but is more preferably 1.3% or less.

The endcount of the steel cords is preferably 20 to 50 (ends/5 cm).

<Second embodiment>

The studies of the present inventor have further revealed that the use of the method according to the first embodiment alone has the following disadvantage: a sealant having a generally string shape is occasionally difficult to attach to the inner periphery of a tire and can easily peel off particularly at the attachment start portion. A second embodiment is characterized in that in the method for producing a self-sealing tire, the sealant is attached under conditions where the distance between the inner periphery of the tire and the tip of the nozzle is adjusted to a distance $d_1$ and then to a distance $d_2$ larger than the distance $d_1$. In this case, since the distance between the inner periphery of the tire and the tip of the nozzle is shortened at the beginning of the attachment, the width of the sealant corresponding to the attachment start portion is increased. Accordingly, a self-sealing tire can be easily produced in which a generally string-shaped adhesive sealant is continuously and spirally attached at least to the inner periphery of the tire that corresponds to a tread portion, and at least one of the longitudinal ends of the sealant forms a wider portion having a width larger than that of the longitudinally adjoining portion. In this self-sealing tire, a portion of the sealant that corresponds to the attachment start portion has a larger width to improve adhesion of this portion so that peeling of this portion of the sealant can be prevented.

The description of the second embodiment basically includes only features different from the first embodiment, and the contents overlapping the description of the first embodiment are omitted.

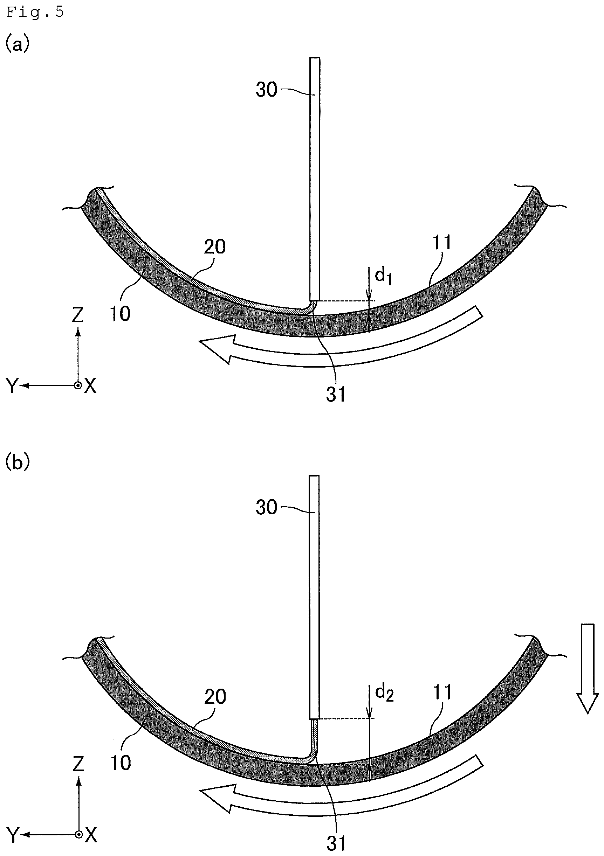

Figs. 5 are enlarged views showing the vicinity of the tip of the nozzle included in the applicator shown in Fig. 1. Fig. 5 (a) illustrates that immediately after attachment of the sealant is started and Fig. 5(b) illustrates that after a lapse of a predetermined time.

Figs. 5 each show a cross-section of a part of a tire 10 taken along a plane including the circumferential and radial directions of the tire. In Figs. 5, the width direction (axis direction) of the tire is indicated by arrow X, the circumferential direction of the tire is indicated by arrow Y, and the radial direction of the tire is indicated by arrow Z.

According to the second embodiment, the tire 10 formed through a vulcanization step is first mounted on a rotary drive device, and a nozzle 30 is inserted into the inside of the tire 10. Then, as shown in Figs. 1 and 5, the tire 10 is rotated and simultaneously moved in the width direction while a sealant 20 is discharged from the nozzle 30, whereby the sealant is continuously applied to the inner periphery 11 of the tire 10. The tire 10 is moved in the width direction according to, for example, the pre-entered profile of the inner periphery 11 of the tire 10.

The sealant 20, which is adhesive and has a generally string shape, is continuously and spirally attached to the inner periphery 11 of the tire 10 that corresponds to a tread portion.

In this process, as shown in Fig. 5(a), the sealant 20 is attached under conditions where the distance between the inner periphery 11 of the tire 10 and the tip 31 of the nozzle 30 is adjusted to a distance $d_1$ for a predetermined time from the start of the attachment. Then, after a lapse of the predetermined time, as shown in Fig. 5 (b), the tire 10 is moved in the radial direction to change the distance to a distance $d_2$ larger than the distance $d_1$, and then the sealant 20 is attached.

The distance may be changed from the distance $d_2$ back to the distance $d_1$ before completion of the attachment of the sealant. However, in view of production efficiency and tire weight balance, the distance $d_2$ is preferably maintained until the sealant attachment is completed.

Preferably, the distance $d_1$ is kept constant for a predetermined time from the start of the attachment, and after a lapse of the predetermined time the distance $d_2$ is kept constant, although the distances $d_1$ and $d_2$ are not necessarily constant as long as they satisfy the relation of $d_1 < d_2$.

The distance $d_1$ is not particularly limited. In order to more suitably achieve the effects of the present invention, the distance $d_1$ is preferably 0.3 mm or more, more preferably 0.5 mm or more. When the distance $d_1$ is less than 0.3 mm, the tip of the nozzle is so close to the inner periphery of the tire that the sealant can easily adhere to the nozzle, which may require the nozzle to be cleaned more frequently. The distance $d_1$ is also preferably 2 mm or less, more preferably 1 mm or less. When the distance $d_1$ is more than 2 mm, the effect of the presence of a wider portion may not be sufficient.

The distance $d_2$ is also not particularly limited. To more suitably achieve the effects of the present invention, the distance $d_2$ is preferably 0.3 mm or more, more preferably 1 mm or more, but is preferably 3 mm or less, more preferably 2 mm or less. The distance $d_2$ is preferably the same as the adjusted distance $d_0$ described above.

Herein, the distances $d_1$ and $d_2$ between the inner periphery of the tire and the tip of the nozzle each refer to the distance in the tire radial direction between the inner periphery of the tire and the tip of the nozzle.

The rotational speed of the tire during the attachment of the sealant is not particularly limited. To more suitably achieve the effects of the present invention, the rotational speed is preferably 5 m/min or higher, more preferably 10 m/min or higher, but is preferably 30 m/min or lower, more preferably 20 m/min or lower. When the rotational speed is lower than 5 m/min or higher than 30 m/min, a sealant having a uniform thickness cannot be easily attached.

The self-sealing tire according to the second embodiment may be produced through the steps described above.

Fig. 6 is an explanatory view schematically showing an example of a sealant attached to a self-sealing tire according to the second embodiment.

The generally string-shaped sealant 20 is wound in the circumferential direction of the tire and continuously and spirally attached. Here, one of the longitudinal ends of the sealant 20 forms a wider portion 21 having a width larger than that of the longitudinally adjoining portion. The wider portion 21 corresponds to the attachment start portion of the sealant.

The width of the wider portion of the sealant (the width of the wider portion of the applied sealant, length indicated by $W_1$ in Fig. 6) is not particularly limited. To more suitably achieve the effects of the present invention, the width of the wider portion is preferably 103% or more, more preferably 110% or more, still more preferably 120% or more of the width of the sealant other than the wider portion (length indicated by $W_0$ in Fig. 6). When it is less than 103%, the effect of the presence of a wider portion may not be sufficient. The width of the wider portion of the sealant is also preferably 210% or less, more preferably 180% or less, still more preferably 160% or less of the width of the sealant other than the wider portion. When it is more than 210%, the tip of the nozzle needs to be placed excessively close to the inner periphery of the tire to form a wider portion, with the result that the sealant can easily adhere to the nozzle, which may require the nozzle to be cleaned more frequently. In addition, tire weight balance may be impaired.

The width of the wider portion of the sealant is preferably substantially constant in the longitudinal direction but may partially be substantially non-constant. For example, the wider portion may have a shape in which the width is the largest at the attachment start portion and gradually decreases in the longitudinal direction. The substantially constant width as used herein means that the width varies within a range from 90% to 110%, preferably from 97% to 103%, more preferably from 98% to 102%, still more preferably from 99% to 101%.

The length of the wider portion of the sealant (the length of the wider portion of the applied sealant, length indicated by $L_1$ in Fig. 6) is not particularly limited. To more suitably achieve the effects of the present invention, the length is preferably less than 650 mm, more preferably less than 500 mm, still more preferably less than 350 mm, particularly preferably less than 200 mm. If the length is 650 mm or more, since the tip of the nozzle needs to be placed close to the inner periphery of the tire for a longer period of time, the sealant can easily adhere to the nozzle, which may require the nozzle to be cleaned more frequently. In addition, tire weight balance may be impaired. The sealant preferably has a shorter wider portion; however, from the standpoint of controlling the distance between the inner periphery of the tire and the tip of the nozzle, the limit of the length of the wider portion is about 10 mm.

The width of the sealant other than the wider portion (the width of the applied sealant other than the wider portion, length indicated by $W_0$ in Fig. 6) is not particularly limited. To more suitably achieve the effects of the present invention, the width is preferably 0.8 mm or more, more preferably 1.3 mm or more, still more preferably 1.5 mm or more. When the width is less than 0.8 mm, the number of turns of the sealant around the inner periphery of the tire may increase, reducing production efficiency. The width of the sealant other than the wider portion is also preferably 18 mm or less, more preferably 13 mm or less, still more preferably 9.0 mm or less, particularly preferably 7.0 mm or less, most preferably 6.0 mm or less, even most preferably 5.0 mm or less. When the width is more than 18 mm, a weight imbalance may be more likely to occur. $W_0$ is preferably the same as the above-described W.

The width of the sealant other than the wider portion is preferably substantially constant in the longitudinal direction but may partially be substantially non-constant.

The width of the area where the sealant is attached (hereinafter also referred to as the width of the attachment area or the width of the sealant layer, and corresponding to a length equal to $W_1 + 6 \times W_0$ in Fig. 6) is not particularly limited. To more suitably achieve the effects of the present invention, the width is preferably 80% or more, more preferably 90% or more, still more preferably 100% or more, but preferably 120% or less, more preferably 110% or less, of the tread contact width.

To more suitably achieve the effects of the present invention, the width of the sealant layer is preferably 85 to 115%, more preferably 95 to 105% of the width of the breaker of the tire (the length of the breaker in the tire width direction).

In the self-sealing tire according to the second embodiment, the sealant is preferably attached without overlapping in the width direction and more preferably without gaps.

In the self-sealing tire according to the second embodiment, the other longitudinal end (the end corresponding to the attachment ending portion) of the sealant may also form a wider portion having a width larger than that of the longitudinally adjoining portion.

The thickness of the sealant (the thickness of the applied sealant or the sealant layer, length indicated by D in Fig. 8) is not particularly limited. To more suitably achieve the effects of the present invention, the thickness of the sealant is preferably 1.0 mm or more, more preferably 1.5 mm or more, still more preferably 2.0 mm or more, particularly preferably 2.5 mm or more, but is preferably 10 mm or less, more preferably 8.0 mm or less, still more preferably 5.0 mm or less. When the thickness is less than 1.0 mm, a puncture hole, if formed in the tire, is difficult to reliably seal. Also, a thickness of more than 10 mm is not preferred because tire weight increases, although with little improvement in the effect of sealing puncture holes.

The sealant preferably has a substantially constant thickness (thickness of the applied sealant or the sealant layer) . In this case, the deterioration of tire uniformity can be further prevented and a self-sealing tire having a much better weight balance can be produced.

The ratio of the thickness of the sealant (the thickness of the applied sealant or the sealant layer, length indicated by D in Fig. 8) to the width of the sealant other than the wider portion (the width of the applied sealant other than the wider portion, length indicated by $W_0$ in Fig. 6) [(thickness of sealant)/(width of sealant other than wider portion)] is preferably 0.6 to 1.4, more preferably 0.7 to 1.3, still more preferably 0.8 to 1.2, particularly preferably 0.9 to 1.1. A ratio closer to 1.0 results in a sealant having an ideal string shape which allows for the production of a self-sealing tire having high sealing performance with higher productivity.

To more suitably achieve the effects of the present invention, the cross-sectional area of the sealant (the cross-sectional area of the applied sealant, area calculated by D × W in Fig. 8) is preferably 0.8 $mm^2$ or more, more preferably 1.95 $mm^2$ or more, still more preferably 3.0 $mm^2$ or more, particularly preferably 3.75 $mm^2$ or more, but is preferably 180 $mm^2$ or less, more preferably 104 $mm^2$ or less, still more preferably 45 $mm^2$ or less, particularly preferably 35 $mm^2$ or less, most preferably 25 $mm^2$ or less.

According to the second embodiment, even when the sealant has a viscosity and shear modulus within the ranges indicated earlier, and particularly when it has a relatively high viscosity and shear modulus, widening a portion of the sealant that corresponds to the attachment start portion improves adhesion of this portion so that peeling of this portion of the sealant can be prevented.

The self-sealing tire according to the second embodiment is preferably produced as described above. However, the self-sealing tire may be produced by any other appropriate method as long as at least one of the ends of the sealant is allowed to form a wider portion.

The above descriptions, and particularly the description of the first embodiment, explain the case where a non-contact displacement sensor is used in applying the sealant to the inner periphery of the tire. In the present invention, however, the sealant may be applied to the inner periphery of the tire while controlling the movement of the nozzle and/or tire according to the pre-entered coordinate data, without measurement using a non-contact displacement sensor.

EXAMPLES

The present invention will be specifically described with reference to, but not limited to, examples below.

The chemicals used in the examples are listed below.

Non-halogenated butyl rubber: Butyl 268 (available from Exxon Mobil Corporation, Mooney viscosity $ML_{1+8}$ at 125°C: 51, halogen content: 0% by mass)

Brominated butyl rubber: Bromobutyl 2255 (available from Exxon Mobil Corporation, Mooney viscosity $ML_{1+8}$ at 125°C: 46, halogen content: 2.0% by mass)

Liquid polybutene: Nisseki polybutene HV300 (available from JX Nippon Oil & Energy Corporation, kinematic viscosity at 40°C: 26000 $mm^2$/s, kinematic viscosity at 100°C: 590 $mm^2$/s, number average molecular weight: 1400)

Carbon black: N330 (available from Cabot Japan K.K., HAF grade, DBP oil absorption: 102 ml/100 g)

Silica: Ultrasil VN3 ($N_2SA$: 175 $m^2$/g) available from Evonik

Plasticizer: DOP (dioctyl phthalate, available from Showa Chemical Co., Ltd., specific gravity: 0.96, viscosity: 81 mPs·S)

Processing aid: Struktol EF44 (a fatty acid metal salt) available from Schill & Seilacher
Crosslinking activator: VULNOC GM (available from Ouchi Shinko Chemical Industrial Co., Ltd., p-benzoquinone dioxime)
Zinc oxide: Zinc oxide #2 available from Mitsui Mining & Smelting Co., Ltd.
Crosslinking agent: NYPER NS (available from NOF Corporation, dibenzoyl peroxide (40% dilution, dibenzoyl peroxide: 40%, dibutyl phthalate: 48%), the amount shown in Table 1 is the net benzoyl peroxide content)

<Production of self-sealing tire>

According to each of the recipes shown in Table 1, the chemicals were introduced into a twin screw kneading extruder as follows: the butyl rubber, either the carbon black or silica, and the crosslinking activator were introduced from the upstream supply port; the liquid polybutene was introduced from the midstream supply port; and either the plasticizer or processing aid and the crosslinking agent were introduced from the downstream supply port. They were kneaded at a barrel temperature of 100°C, a screw rotational speed of 200 rpm, and a pressure of 5.0 MPa to prepare a sealant. The liquid polybutene was heated to 50°C before the introduction from the supply port.

(Time for kneading materials)

Time for mixing butyl rubber, either carbon black or silica, and crosslinking activator: 2 minutes
Time for mixing liquid polybutene: 2 minutes
Time for mixing either plasticizer or processing aid and crosslinking agent: 1.5 minutes

Next, the tip of a nozzle directly connected to the outlet of the twin screw kneading extruder was placed at the inner surface of a tire, and the sequentially prepared sealant (temperature: 100°C, viscosity at 40°C: 20000 Pa·s, generally string shape) was discharged from the nozzle to the inner surface of the tire (preheated at 40°C) rotating in the circumferential direction, whereby the sealant was continuously and spirally applied to the inner periphery of the tire as shown in Figs. 1 to 4. In this manner, a self-sealing tire was produced.

The viscosity of the sealant at 40°C was measured in accordance with JIS K 6833-1:2008 using a rotational viscometer at 40°C.

The steady-flow shear viscosity of the sealant was measured under the conditions described below to plot a graph with measurement strain on the horizontal axis and shear viscosity on the vertical axis for each of the measurement temperatures. The maximum shear viscosities were used as the viscosities at the respective temperatures (0°C, 95°C). Moreover, the shear modulus within a measurement strain range from 0% to 100% (the slope of the graph within a measurement strain range from 0% to 100%) at each of the temperatures (0°C, 95°C) was read out and used as the shear modulus at the corresponding temperature (0°C, 95°C).

<Measurement conditions>

Measurement device: rheometer MCR52 available from Anton Paar Japan K.K.
Measurement mode: Steady-flow shear viscosity
Measurement temperature: 0°C or 95°C
Preheating time: 1 minute after insertion between plates heated at a preset temperature
Gap: 1 mm, distance between plates, no extruded sealant
Measurement time: 15 seconds
Measurement strain: 0% to 10,000%
Shear rate: 6 (1/s)
Rotor shape: Circular plate

1. Sealing performance evaluation

The sealant was applied at a thickness of 3 mm to the inner surface of a vulcanized 195/65R15 tire (entirely in the circumferential direction, and from one breaker edge to the other breaker edge in the width direction). A nail of 4 mm diameter and 50 mm length was driven into the tire filled with air at an internal pressure of 230 kPa. Three hours later, the nail was removed and immediately the internal pressure was measured. The results of sealing performance (air sealing performance) of the examples are expressed as an index relative to Comparative Example 1 according to the equation below. A higher sealing performance index indicates a smaller reduction in internal pressure and better sealing performance (air sealing performance).

```
(Sealing performance index) = (Internal pressure of each
example)/(Internal pressure of Comparative Example 1) × 100
```

2. Fluidity evaluation

The sealant (temperature: 100°C, viscosity at 40°C: 20000 Pa·s, generally string shape) was applied at a thickness of 3 mm to the inner surface of a vulcanized 195/65R15 tire (entirely in the circumferential direction, and from one breaker edge to the other breaker edge in the width direction). After running of the tire with an internal pressure of 230 kPa at 80 km/h, the moving distance of the sealant at the breaker edges was measured. The results of fluidity (initial fluidity) of the examples are expressed as an index relative to Comparative Example 1 according to the equation below. A higher fluidity index indicates a shorter moving distance and better fluidity (initial fluidity).

```
(Fluidity index) = (Moving distance of Comparative Example
1)/(Moving distance of each example) × 100
```

[Table 1]

| | | Example | | | | | | | | | | | Comparative Example | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| Amount (parts by mass) | Non-halogenated butyl rubber | 100 | — | — | — | — | — | — | — | — | — | — | — | — | 100 | — |
| | Brominated butyl rubber | — | 100 | 100 | 100 | 100 | 100 | 100 | 100 | 100 | 100 | 100 | 100 | 100 | — | 100 |
| | Liquid polybutene | 200 | 200 | 250 | 250 | 200 | 200 | 200 | 200 | 200 | 330 | 300 | 100 | 350 | 100 | 350 |
| | Carbon black | 10 | 10 | 10 | 10 | 10 | — | 10 | 10 | 10 | 10 | 20 | 5 | 5 | 50 | 5 |
| | Silica | — | — | — | — | — | 10 | — | — | — | — | — | — | — | — | — |
| | Plasticizer | 10 | 10 | 10 | 10 | 10 | 10 | — | 10 | 10 | 10 | 10 | 5 | 5 | 5 | 5 |
| | Processing aid | — | — | — | — | — | — | 10 | — | — | — | — | — | — | — | — |
| | Crosslinking activator | 5 | 5 | 5 | 10 | 10 | 5 | 5 | — | — | 10 | 8 | 1 | 1 | 20 | 5 |
| | Zinc oxide | — | — | — | — | — | — | — | 5 | 10 | — | — | — | — | — | — |
| | Crosslinking agent | 5 | 5 | 5 | 10 | 10 | 5 | 5 | 5 | 10 | 5 | 8 | 1 | 1 | 20 | 5 |
| Viscosity | Viscosity at 0°C (KPa·s) | 80 | 80 | 28 | 30 | 80 | 80 | 70 | 60 | 55 | 16 | 80 | 85 | 15 | 100 | 15.8 |
| | Viscosity at 95°C (KPa·s) | 5 | 8 | 7 | 13 | 15 | 10 | 8 | 8 | 8 | 15 | 1 | 17 | 0.5 | 0.5 | 15.3 |
| | Viscosity difference (KPa·s) | 75 | 72 | 21 | 17 | 65 | 70 | 62 | 52 | 47 | 1 | 79 | 68 | 14.5 | 99.5 | 0.5 |
| Elastic modulus | Shear modulus at 0°C (Kpa) | 40 | 40 | 12 | 12 | 38 | 40 | 25 | 20 | 15 | 20 | 35 | 45 | 11.5 | 60 | 18 |
| | Shear modulus at 95°C (Kpa) | 2 | 4 | 3 | 10 | 10 | 6 | 4 | 5 | 8 | 8 | 5 | 1 | 10.5 | 1 | 13 |
| | Shear modulus difference (Kpa) | 38 | 36 | 9 | 2 | 28 | 34 | 21 | 15 | 7 | 12 | 30 | 44 | 1 | 59 | 5 |
| Evaluation | Sealing performance | 105 | 105 | 120 | 120 | 110 | 105 | 114 | 116 | 118 | 115 | 105 | 100 | 99 | 96 | 101 |
| | Fluidity | 105 | 110 | 108 | 120 | 120 | 115 | 110 | 113 | 118 | 112 | 113 | 100 | 99 | 97 | 100 |

23

The sealants of the examples having an absolute difference between the viscosities at 0°C and 95°C within a predetermined range and an absolute difference between the shear moduli at 0°C and 95°C within a predetermined range had a particularly good balance of excellent sealing performance and fluidity.

REFERENCE SIGNS LIST

    10 Tire
    11 Inner periphery of tire
    14 Tread portion
    15 Carcass
    16 Breaker
    17 Band
    20 Sealant
    21 Wider portion
    30 Nozzle
    31 Tip of nozzle
    40 Non-contact displacement sensor
    50 Rotary drive device
    60 Twin screw kneading extruder
    61 (61a, 61b, 61c) Supply port
    62 Material feeder
    d, $d_0$, $d_1$, $d_2$ Distance between inner periphery of tire and tip of nozzle

**Claims**

1. A rubber composition for pneumatic tires, the rubber composition having a shear modulus at 0°C of 12 to 40 kPa and a shear modulus at 95°C of 2 to 10 kPa.

2. The rubber composition for pneumatic tires according to claim 1,
   wherein the rubber composition has an absolute difference between viscosities at 0°C and 95°C of 1 to 79 kPa·s and an absolute difference between shear moduli at 0°C and 95°C of 2 to 38 kPa.

3. The rubber composition for pneumatic tires according to claim 1 or 2,
   wherein the rubber composition has a viscosity at 0°C of 16 to 80 kPa·s and a viscosity at 95°C of 1 to 15 kPa·s.

4. The rubber composition for pneumatic tires according to any one of claims 1 to 3,
   wherein the rubber composition comprises:

   a rubber component including a butyl-based rubber; and
   an organic peroxide.

5. The rubber composition for pneumatic tires according to claim 4,
   wherein the butyl-based rubber is present in an amount of 80% by mass or more based on 100% by mass of the rubber component.

6. The rubber composition for pneumatic tires according to claim 4 or 5,
   wherein the rubber composition comprises, per 100 parts by mass of the rubber component, 1 to 40 parts by mass of the organic peroxide and 1 to 40 parts by mass of a crosslinking activator.

7. The rubber composition for pneumatic tires according to claim 6,
   wherein the crosslinking activator is zinc oxide.

8. The rubber composition for pneumatic tires according to any one of claims 4 to 7,
   wherein the butyl-based rubber is a halogenated butyl rubber.

**9.** The rubber composition for pneumatic tires according to claim 8,
wherein the halogenated butyl rubber is a brominated butyl rubber.

**10.** The rubber composition for pneumatic tires according to any one of claims 4 to 9,
wherein the rubber composition comprises a liquid polymer in an amount of 100 to 400 parts by mass per 100 parts
by mass of the rubber component.

**11.** The rubber composition for pneumatic tires according to claim 10,
wherein the liquid polymer is a liquid polybutene.

**12.** A pneumatic tire, comprising a sealant layer formed from the rubber composition according to any one of claims 1 to 11.

Fig.1

Fig.2

Fig.3

(d)　(c)　(b)　(a)

30

10

Z

X ← ⊙ Y

11

$d_0$

31

Fig.4

W

Y

X ← ⊙ Z

A

A

Fig.5

(a)

(b)

Fig.6

Fig.7

Fig.8

W

D

Fig.9

14

17

15

16

Fig.10

## INTERNATIONAL SEARCH REPORT

| International application No. |
|---|
| PCT/JP2017/014832 |

A. CLASSIFICATION OF SUBJECT MATTER
*C08L23/22*(2006.01)i, *B29C73/16*(2006.01)i, *B60C19/12*(2006.01)i, *C08K3/22*
(2006.01)i, *C08K5/14*(2006.01)i, *C08L23/28*(2006.01)i, *C08L101/12*(2006.01)i

According to International Patent Classification (IPC) or to both national classification and IPC

B. FIELDS SEARCHED

Minimum documentation searched (classification system followed by classification symbols)
C08L23/22, B29C73/16, B60C19/12, C08K3/22, C08K5/14, C08L23/28,
C08L101/12

Documentation searched other than minimum documentation to the extent that such documents are included in the fields searched
Jitsuyo Shinan Koho        1922-1996    Jitsuyo Shinan Toroku Koho   1996-2017
Kokai Jitsuyo Shinan Koho  1971-2017    Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 58-23865 A (Hirodain Kogyo Kabushiki Kaisha), 12 February 1983 (12.02.1983), (Family: none) | 1-12 |
| A | JP 2003-519715 A (Silu Verwaltung AG.), 24 June 2003 (24.06.2003), & WO 2001/051582 A1 & EP 1288273 A2 & EP 1477542 A1 & US 2003/0013801 A1 | 1-12 |
| A | EP 2329940 A1 (The Goodyear Tire & Rubber Co.), 08 June 2011 (08.06.2011), & US 2011/0126953 A1 | 1-12 |
| A | JP 57-42753 A (Rockcor Inc.), 10 March 1982 (10.03.1982), (Family: none) | 1-12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 May 2017 (08.05.17) | 16 May 2017 (16.05.17) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2017/014832 |

C (Continuation).   DOCUMENTS CONSIDERED TO BE RELEVANT

| Category* | Citation of document, with indication, where appropriate, of the relevant passages | Relevant to claim No. |
|---|---|---|
| P,X | JP 2016-108540 A  (Sumitomo Rubber Industries, Ltd.), 20 June 2016 (20.06.2016), claims 1 to 11; examples 1 to 6 & EP 3009473 A1 claims 1 to 11; examples 1 to 6 | 1-12 |

Form PCT/ISA/210 (continuation of second sheet) (January 2015)

**EP 3 434 730 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

JP 2010528131 T
- JP 2001018609 A